(19) **Europäisches Patentamt**
**European Patent Office**
**Office européen des brevets**

(11) **EP 4 654 683 A1**

(12) **EUROPEAN PATENT APPLICATION**
published in accordance with Art. 153(4) EPC

(43) Date of publication:
**26.11.2025 Bulletin 2025/48**

(21) Application number: **23916652.3**

(22) Date of filing: **16.01.2023**

(51) International Patent Classification (IPC):
**H04W 64/00** (2009.01)

(52) Cooperative Patent Classification (CPC):
**H04W 64/00**

(86) International application number:
**PCT/CN2023/072420**

(87) International publication number:
**WO 2024/152161 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **ZHANG, Shichang**
**Dongguan, Guangdong 523860 (CN)**
• **MA, Teng**
**Dongguan, Guangdong 523860 (CN)**

(74) Representative: **Penza, Giancarlo**
**Bugnion S.p.A.**
**Viale Lancetti, 17**
**20158 Milano (IT)**

(54) **SIDELINK POSITIONING REFERENCE SIGNAL TRANSMISSION METHOD AND APPARATUS, DEVICE, AND MEDIUM**

(57) A sidelink positioning reference signal transmission method and apparatus, a device, and a medium, which relate to the field of wireless communications. The method is applied to a responding terminal, and comprises: according to indication information from an initiating terminal, accessing a channel, and sending a first physical sidelink control channel PSCCH and a first sidelink positioning reference signal SL PRS (210). The method allows a responding terminal to send an SL PRS according to an indication from an initiating terminal, thereby achieving the responding terminal sharing the COT of the initiating terminal.

Access a channel and send the first PSCCH and the first SL PRS, according to indication information from an IUE — 210

**FIG. 16**

EP 4 654 683 A1

**Description**

TECHNICAL FIELD

The present disclosure relates to the field of wireless communication, in particular to a method and an apparatus for sending a Sidelink (SL) Positioning Reference Signal (PRS), a device, and a medium.

BACKGROUND

The User Equipment (UE) performs Listen Before Talk (LBT) on a carrier in the unlicensed spectrum after the arrival of a service, and starts to send a signal on the carrier after the LBT is successful. The manner for the LBT includes a Type 1 channel access manner and a Type 2 channel access manner. The Type 1 LBT is mainly used for the communication device to initiate channel occupancy. When the UE in the SideLink-Unlicense (SL-U) system successfully accesses the channel through the Type 1 LBT, the transmission resource can be shared with other UEs in the SL-U system, that is, the Channel Occupancy Time (COT) sharing mechanism. Other UEs can use the shared channel through the Type 2 channel access manner, which can improve the channel access success rate and transmission efficiency of the SL-U UE.

How the COT should be shared between UEs when sending a SL PRS on the unlicensed spectrum is an unresolved issue.

SUMMARY

Embodiments of the present disclosure provide a method and an apparatus for sending a SL PRS, a device, and a medium, which can cause a Responding UE (RUE) to send a SL PRS according to an instruction from an Initiating User Equipment (IUE), so that the RUE is shared with a COT of the IUE. The technical solutions are as follows.

In an aspect of the present disclosure, a method for sending a SL PRS is provided. The method is performed by a RUE. The method includes the following operation.

A channel is accessed and the first Physical Sidelink Control Channel (PSCCH) and the first SL PRS are sent, according to indication information from an IUE.

In an aspect of the present disclosure, a method for sending a SL PRS is provided. The method is performed by an IUE. The method includes the following operation.

Indication information is sent. The indication information is used for indicating, to a RUE, sending manners of the first PSCCH and the first SL PRS.

In an aspect of the present disclosure, an apparatus for sending a SL PRS is provided. The apparatus is used for implementing a RUE. The apparatus includes the first sending module.

The first sending module is configured to access a channel and send the first PSCCH and the first SL PRS, according to indication information from an IUE.

In an aspect of the present disclosure, an apparatus for sending a SL PRS is provided. The apparatus is used for implementing an IUE. The apparatus includes the second sending module.

The second sending module is configured to send indication information. The indication information is used for indicating, to a RUE, sending manners of the first PSCCH and the first SL PRS.

In an aspect of the present disclosure, a responding UE is provided. The responding UE includes a processor and a transceiver coupled to the processor.

The transceiver is configured to access a channel and send the first PSCCH and the first SL PRS, according to indication information from an IUE.

In an aspect of the present disclosure, an IUE is provided. The IUE includes a processor and a transceiver coupled to the processor.

The transceiver is configured to send indication information. The indication information is used for indicating, to a responding UE, sending manners of the first PSCCH and the first SL PRS.

In an aspect of the present disclosure, a responding UE is provided. The responding UE includes a processor and a memory. The memory stores at least one instruction, at least one program, a code set or an instruction set, and the at least one instruction, the at least one program, the code set or the instruction set is loaded and executed by the processor to implement the method for sending a SL PRS according to the above aspect.

In an aspect of the present disclosure, an IUE is provided. The IUE includes a processor and a memory. The memory stores at least one instruction, at least one program, a code set or an instruction set, and the at least one instruction, the at least one program, the code set, or the instruction set is loaded and executed by the processor to implement the method for sending a SL PRS according to the above aspect.

In an aspect of the present disclosure, a computer readable storage medium is provided. Executable instructions are stored in the computer readable storage medium. The Executable instructions are loaded and executed by a processor to cause a communication device to implement the method for sending a SL PRS according to the above aspect.

In an aspect of the embodiments of the present disclosure, a chip is provided. The chip includes a programmable logic circuit and/or program instructions for causing a communication device to implement the method for sending a SL PRS according to the above aspect when the chip is running in the communication device.

In an aspect of the present disclosure, a computer program product is provided. When the computer program product is run on a processor of a communication device, a communication device performs the method for sending a SL PRS according to the above aspect.

The technical solutions provided by the embodiments of the present disclosure include at least the following beneficial effects.

The IUE sends the indication information, so that the RUE accesses the channel and sends the first PSCCH and the first SL PRS, according to the indication information. The IUE may share the COT with the RUE through the indication information, so that the UE that sends the SL PRS on the unlicensed spectrum can be shared with the COT.

BRIEF DESCRIPTION OF THE DRAWINGS

In order to more clearly explain the technical solutions in the embodiments of the present disclosure, the accompanying drawings that need to be used in the description of the embodiments will be briefly introduced below. It is apparent that the accompanying drawings in the following description are only some embodiments of the present disclosure, and for those skilled in the art, other accompanying drawings may be obtained from these accompanying drawings without making creative efforts.

FIG. 1 is a schematic diagram of a communication system according to an exemplary embodiment of the present disclosure.

FIG. 2 is a schematic diagram of SL communication according to an exemplary embodiment of the present disclosure.

FIG. 3 is a schematic diagram of SL communication according to an exemplary embodiment of the present disclosure.

FIG. 4 is a schematic diagram of SL communication according to an exemplary embodiment of the present disclosure.

FIG. 5 is a schematic diagram of a method for sending a SL PRS according to an exemplary embodiment of the present disclosure.

FIG. 6 is a schematic diagram of a method for sending a SL PRS according to an exemplary embodiment of the present disclosure.

FIG. 7 is a schematic diagram of a method for sending a SL PRS according to an exemplary embodiment of the present disclosure.

FIG. 8 is a schematic diagram of a method for sending a SL PRS according to an exemplary embodiment of the present disclosure.

FIG. 9 is a schematic diagram of a method for sending a SL PRS according to an exemplary embodiment of the present disclosure.

FIG. 10 is a schematic diagram of a method for sending a SL PRS according to an exemplary embodiment of the present disclosure.

FIG. 11 is a schematic diagram of a method for sending a SL PRS according to an exemplary embodiment of the present disclosure

FIG. 12 is a schematic diagram of a method for sending a SL PRS according to an exemplary embodiment of the present disclosure.

FIG. 13 is a schematic diagram of a method for sending a SL PRS according to an exemplary embodiment of the present disclosure.

FIG. 14 is a schematic diagram of a method for sending a SL PRS according to an exemplary embodiment of the present disclosure.

FIG. 15 is a schematic diagram of a method for sending a SL PRS according to an exemplary embodiment of the present disclosure.

FIG. 16 is a flowchart of a method for sending a SL PRS according to an exemplary embodiment of the present disclosure

FIG. 17 is a flowchart of a method for sending a SL PRS according to an exemplary embodiment of the present disclosure.

FIG. 18 is a flowchart of a method for sending a SL PRS according to an exemplary embodiment of the present disclosure.

FIG. 19 is a flowchart of a method for sending a SL PRS according to an exemplary embodiment of the present disclosure.

FIG. 20 is a flowchart of a method for sending a SL PRS according to an exemplary embodiment of the present disclosure.

FIG. 21 is a flowchart of a method for sending a SL PRS according to an exemplary embodiment of the present disclosure.

FIG. 22 is a schematic diagram of a method for sending a SL PRS according to an exemplary embodiment of the present disclosure.

FIG. 23 is a schematic diagram of a method for sending a SL PRS according to an exemplary embodiment of the present disclosure.

FIG. 24 is a schematic diagram of a method for sending a SL PRS according to an exemplary embodiment of the present disclosure.

FIG. 25 is a schematic diagram of a method for sending a SL PRS according to an exemplary embodiment of the present disclosure.

FIG. 26 is a schematic diagram of a method for sending a SL PRS according to an exemplary embodiment of the present disclosure.

FIG. 27 is a schematic diagram of a method for sending a SL PRS according to an exemplary embodiment of the present disclosure.

FIG. 28 is a structural block diagram of an apparatus for sending a SL PRS according to an exemplary embodiment of the present disclosure.

FIG. 29 is a structural block diagram of an apparatus for sending a SL PRS according to an exemplary embodiment of the present disclosure.

FIG. 30 is a schematic structural diagram of a communication device according to an exemplary embodiment of the present disclosure.

DETAILED DESCRIPTION

In order to clarify the object, technical solutions, and advantages of the present disclosure, embodiments of the present disclosure will be described in further detail below with reference to the accompanying drawings.

The network architecture and the service scenarios described in the embodiments of the present disclosure are for more clearly describing the technical solutions of the embodiments of the present disclosure, and do not constitute a limitation on the technical solutions provided by the embodiments of the present disclosure. Those skilled in the art will know that with the evolution of the network architecture and the emergence of new service scenarios, the technical solutions provided by the embodiments of the present disclosure are equally applicable to similar technical problems.

It should be understood that the "indication" mentioned in the embodiments of the present disclosure may be a direct indication, an indirect indication, or used for describing an association relationship. For example, A indicates B, which may mean that A directly indicates B, for example, B may be acquired by A. It may also mean that A indicates B indirectly, for example, A indicates C, and B may be acquired through C. It may also mean that there is an association relationship between A and B.

In the description of the embodiments of the present disclosure, the term "correspondence" may represent that there is a direct correspondence or indirect correspondence between the two objects, may represent that there is an association relationship between the two objects, or may represent a relationship between indicating and being instructed, configuring and being configured, or the like.

In the embodiments of the present disclosure, "predefined" may be implemented by storing corresponding codes, tables, or other methods that may be used to indicate relevant information in advance in devices (including, for example, the UE and network device), and specific implementation methods are not limited in the present disclosure. For example, "predefined" may refer to be defined in the protocol.

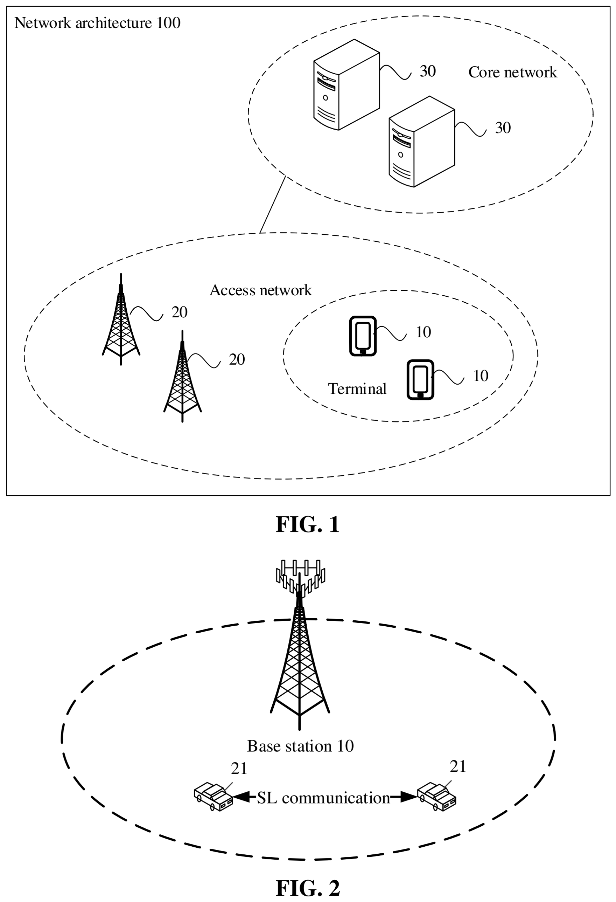

FIG. 1 illustrates a schematic diagram of a network architecture 100 according to an embodiment of the present disclosure. The network architecture 100 may include terminals 10, access network devices 20, and core network devices 30.

The terminals 10 may refer to a User Equipment (UE), an access UE, a subscriber unit, a subscriber station, a mobile station, a mobile stage, a remote station, a remote UE, a mobile device, a wireless communication device, a user agent, or a user device. Alternatively, the terminals 10 may also be a cellular telephone, a cordless telephone, a Session Initiation Protocol (SIP) telephone, a Wireless Local Loop (WLL) station, a Personal Digital Assistant (PDA), a handheld device having a wireless communication function, a computing device or other processing device connected to a wireless modem, a vehicle-mounted device, a wearable device, a UE in a 5th Generation System (5GS) or a UE in a future evolved Public Land Mobile Network (PLMN), or the like, which is not limited in the embodiments of the present disclosure. For convenience of description, the above devices are collectively referred to as terminals. There are typically multiple terminals 10, and one or more terminals 10 may be distributed in a cell managed by each access network device 20.

The access network devices 20 are devices deployed in an access network for providing wireless communication functions for the terminals 10. The access network devices 20 may include various forms of macro base stations, micro base stations, relay stations, access points, and the like. In systems employing different radio access technologies, the names of devices having access network device functions may be different, for example, in the 5G NR system, the devices are called next Generation Node B (gNodeB or gNB). As communications technology evolves, the name "access network device" may change. For convenience of description, in the embodiments of the present disclosure, the devices that provide wireless communication functions for the terminals 10 as mentioned above are collectively referred to as access network devices. Alternatively, a communication relationship may be established between the terminals 10 and the core network devices 30 through the access network devices 20. Exemplarily, in a Long Term Evolution (LTE) system, the access network devices 20 may be an Evolved Universal Terrestrial Radio Access Network (EUTRAN) or one or more eNodeBs in the EUTRAN. In a 5G NR system, the access network devices 20 may be a Radio Access Network (RAN) or one or more gNBs in the RAN. In the embodiments of the present disclosure, unless otherwise specified, the network device refers to the access network device 20, such as a base station.

The core network devices 30 are devices deployed in the core network, and functions of the core network devices 30 are mainly to provide user connection, management of users, and complete bearer of services, and to provide an interface to an external network as a bearer network. For example, a core network device in a 5G NR system may include an Access and Mobility Management Function (AMF) network element, an Authentication Server Function (AUSF) network element, a User Plane Function (UPF) network element, a Session Management Function (SMF) network element, a Location Management Function (LMF) network element, a Policy Control Function (PCF) network element, a Unified Data Management (UDM) network element, and the like.

In one example, the access network device 20 and the core network device 30 communicate with each other through some interface technology, such as NG interfaces in a 5G NR system. The access network device 20 and the terminal 10 communicate with each other through some air interface technology, such as a Uu interface.

The access network device is the access device for UEs access to the network architecture wirelessly. It is mainly responsible for wireless resource management, Quality of Service (QoS) management, data compression and encryption on the air interface side. For example, the access network device may be a base station NodeB, an evolved base station eNodeB, a base station in a 5G mobile communication system or a New Radio (NR) communication system, a base station in a future mobile communication system, or the like.

The core network device includes Network Slice Selection Function (NSSF), Authentication Server Function (AUSF), Unified Data Management (UDM), Access and Mobility Management Function (AMF), Session Management Function (SMF), Policy Control Function (PCF) and User Plane Function (UPF).

The UE performs access Stratum connection with (R) Access Network (AN) through the Uu interface to interact access layer messages and perform wireless data transmission. The UE performs None Access Stratum (NAS) connection with the AMF through the N1 interface to interact NAS messages. The AMF is a mobility management function in the core network, and the SMF is a session management function in the core network. In addition to the mobility management of the UE, the AMF is also responsible for forwarding messages related to the session management between the UE and the SMF. PCF is a policy management function in the core network, which is responsible for formulating policies related to mobility management, session management, billing, etc. for UE. The PCF performs data transmission with an external Application Function (AF) through the N5 interface. The UPF is a user plane function in the core network, and performs data transmission with the external Data Network (DN) through the N6 interface, and performs data transmission with the AN through the N3 interface.

The "5G NR system" in the embodiments of the present disclosure may also be referred to as a 5G system or an NR system, but those skilled in the art can understand the meaning thereof. The technical solutions described in the embodiments of the present disclosure may be applicable to an LTE system, a 5G NR system, a subsequent evolution system of the 5G NR system, and other communication systems such as a Narrow Band Internet of Things (NB-IoT) system, which is not limited in the present disclosure.

Firstly, the relevant content is introduced.

SL transmission technology: unlike conventional cellular systems where communication data is received or sent through the access network device, SL transmission refers to direct transmission of communication data between UEs through SL. Regarding the SL transmission, 3rd Generation Partnership Project (3GPP) defines two transmission modes: Mode A and Mode B. Mode A: the transmission resource of the SL UE is allocated by the access network device, and the SL UE transmits communication data on the SL according to the transmission resource allocated by the access network device. The access network device may allocate the transmission resource for a single transmission to the SL UE, or allocate the transmission resource for a semi-static transmission to the SL UE. Mode B: The SL UE selects one or more transmission resources in the resource pool for transmission of communication data, and the SL UE may select the transmission resource(s) in the resource pool by sensing or the SL UE may select the transmission resource(s) in the resource pool by random selection. When performing SL transmission on the unlicensed spectrum, the access network device may pre-configure multiple resource pools (SL PRS resource pool, SL-U communication resource pool, etc.) for the UE. When performing specific services, the UE may select resource(s) from the corresponding resource pool(s) to perform the LBT process. If the LBT is successful, the UE may occupy these resource(s) to perform the SL transmission on the unlicensed spectrum. When the UE sends the SL data on these resource(s), the UE also sends SCI simultaneously. The SCI indicates the resource(s) occupied by the current SL transmission of the UE. In addition, the SCI may also be used to indicate the resource(s) reserved by the UE. For example, if a part of the resources in the SL PRS resource pool is occupied by the UE through LBT to send the SL PRS, the UE sends the SL PRS and the SCI-P on this part of the resources, and the SCI-P indicates the resource occupied by the current SL PRS and the resource reserved for the subsequent SL PRS.

In the SL transmission, according to the network coverage of the UE that performs communication, the SL communication may include three types: SL communication within network coverage, SL communication within a part of network coverage, and SL communication outside network coverage, as illustrated in FIG. 2, FIG. 3 and FIG. 4 respectively.

FIG. 2: in the SL communication within network coverage, all the UEs 21 that perform the SL communication are within the coverage range of the same base station 10, and thus, the UEs 21 can perform the SL communication based on the same SL configuration by receiving the configuration signaling from the base station 10.

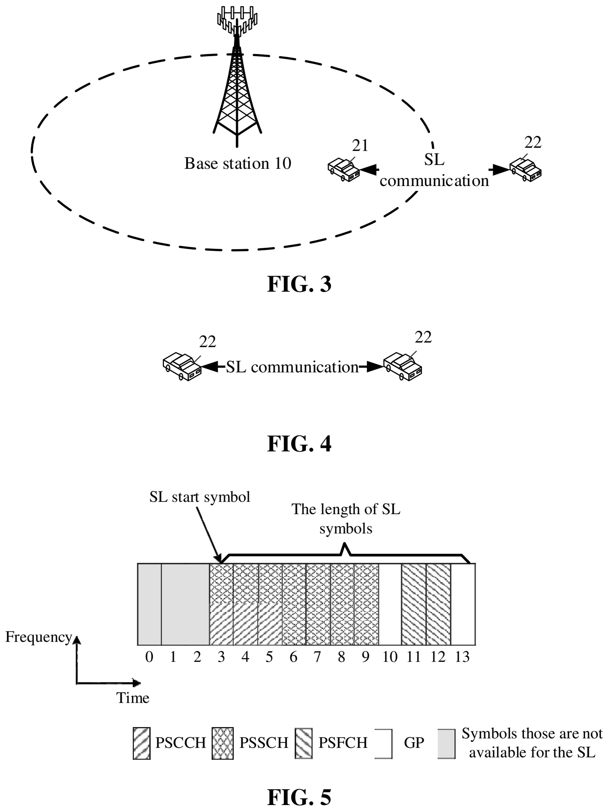

FIG. 3: in a case of the SL communication within a part of network coverage, a part of UEs 21 that perform the SL communication is within the coverage range of the base station, and this part of UEs 21 can receive the configuration signaling from the base station 10 and perform SL communication according to the configuration from the base station 10. However, the UE 22 located outside the network coverage range cannot receive the configuration signaling from the base station 10, and in this case, the UE 22 located outside the network coverage range determines the SL configuration according to the pre-configuration information and the information carried in the Physical Sidelink Broadcast Channel (PSBCH) sent by the UE 21 located within the network coverage range, to perform the SL communication.

FIG. 4: regarding the SL communication outside network coverage, all the UEs 22 that perform the SL communication are located outside the network coverage range, and all the UEs 22 determine, according to the pre-configuration information, the SL configuration to perform the SL communication.

Vehicle to everything (V2X) is a key technology for future intelligent transportation systems. It mainly studies the solution for transmitting vehicle data based on 3GPP communication protocols. The V2X communication includes Vehicle to Vehicle (V2V) communication, vehicle to Infrastructure (V2I) communication, and Vehicle to Pedestrian (V2P) communication. The application of the V2X will improve driving safety, reduce congestion and vehicle energy consumption, and improve traffic efficiency, etc.

**Slot structure in NR-V2X**

In the NR-V2X, a Physical Sidelink Shared Channel (PSSCH) and the Physical Sidelink Control Channel (PSCCH) associated with the PSSCH are sent in the same slot, and the PSCCH occupies two or three time domain symbols. The time domain resource allocation in the NR-V2X takes slots as allocation granularity. The starting point and length of time domain symbols used for the SL transmission in a slot are configured by using the parameters sl-startSLsymbols and sl-lengthSLsymbols. The last symbol in the symbols is used as Guard Period (GP), and the PSSCH and PSCCH can only use the remaining time domain symbols, but if a Physical Sidelink Feedback Channel (PSFCH) transmission resource is configured in a slot, the PSSCH and PSCCH cannot occupy the time domain symbol(s) used for the PSFCH transmission, the Automatic Gain Control (AGC) symbol and GP symbol before the symbol(s).

As illustrated in FIG. 5, the network configures that sl-StartSymbol = 3 and sl-LengthSymbols = 11, that is, 11 time domain symbols starting from the symbol with the index 3 in a slot may be used for the SL transmission, and there is PSFCH transmission resources in this slot. The PSFCH occupies symbols 11 and 12, symbol 11 is used as the AGC symbol of the PSFCH, and symbols 10 and 13 are used as the GP, respectively. The time domain resources used for the PSSCH transmission are symbol 3 to symbol 9. The PSCCH occupies three time domain symbols, i.e., symbols 3, 4, and 5, and the symbol 3 is usually used as an AGC symbol.

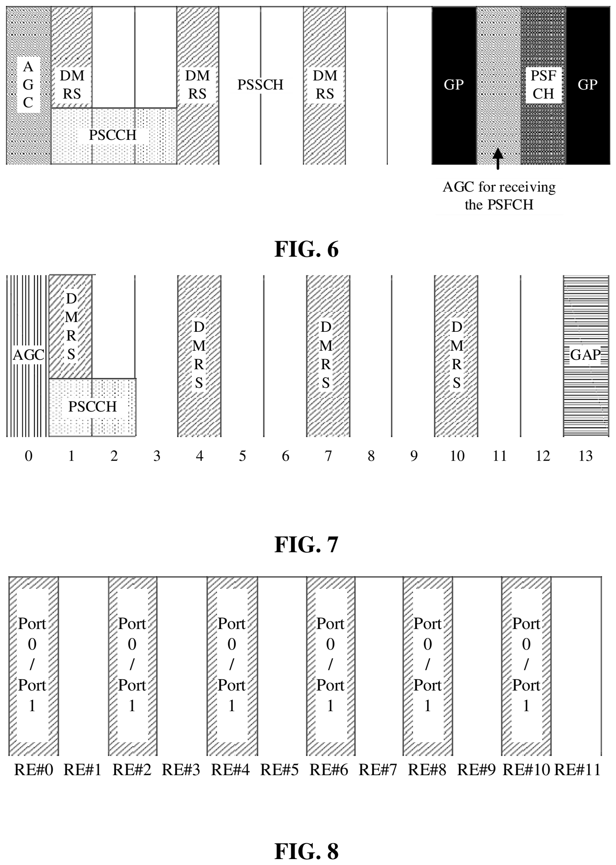

As illustrated in FIG. 6, in addition to the PSCCH and PSSCH, the PSFCH may also exist in a SL slot in the NR-V2X. It may be seen that in a slot, the first Orthogonal Frequency Division Multiplexing (OFDM) symbol is fixed for AGC, and on the AGC symbol, the UE copies the information sent on the second symbol. One symbol is left at the end of the slot for transition between receiving and sending, that is, is used for the UE to transition from the sending (or receiving) state to the receiving (or sending) state. In the remaining OFDM symbols, the PSCCH may occupy two or three OFDM symbols starting from the second SL symbol. In the frequency domain, the number of Physical Resource Blocks (PRBs) occupied by the PSCCH is within the subband range of one PSSCH. If the number of PRBs occupied by the PSCCH is less than the size of one subchannel of the PSSCH, or the frequency domain resources of the PSSCH include multiple subchannels, the OFDM symbols in which the PSCCH is located may be frequency division multiplexed with the PSSCH.

The Demodulation Reference Signal (DMRS) of the PSSCH in NR-V2X use the design in the NR Uu interface for reference and adopts multiple time domain PSSCH DMRS patterns. In a resource pool, the number of available DMRS patterns is related to the number of PSSCH symbols in the resource pool. For a specific number of PSSCH symbols (including the first AGC symbol) and the number of PSCCH symbols, the available DMRS patterns and the position of each DMRS symbol in the pattern are illustrated in Table 1. FIG. 7 illustrates a schematic diagram of the time domain positions of four DMRS symbols when the number of PSSCH symbols is 13, that is, when the number of PSSCH symbols is 13, the number of PSCCH symbols is 2, and the number of DMRS symbols is 4, the positions of DMRS symbols are located at symbols 1, 4, 7, and 10, respectively.

Table 1 Numbers and positions of DMRS symbols under different PSSCH and PSCCH symbols

| Number of PSSCH symbols (including first AGC symbol) | DMRS symbol position (relative to the position of the first AGC symbol) | | | | | |
|---|---|---|---|---|---|---|
| | Number of PSCCH symbols being 2 | | | Number of PSCCH symbols being 3 | | |
| | Number of DMRS Symbols | | | Number of DMRS Symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

If multiple time domain DMRS patterns are configured in the resource pool, the specific time domain DMRS pattern for using is selected by the sending UE and indicated in the first-order SCI. Such a design allows a UE in high-speed motion to select a high-density DMRS pattern, thereby ensuring the accuracy of channel estimation, while for a UE in low-speed motion, a low-density DMRS pattern may be adopted, thereby improving spectrum efficiency.

The generation manner of the PSSCH DMRS sequence is almost exactly the same as that of the PSCCH DMRS sequence. The only difference is that in the initialization formula $c_{init}$ of the pseudo-random sequence c (m),

$$N_{ID} = \sum_{i=0}^{L-1} p_i \cdot 2^{L-1-i}$$ . Here, $p_i$ is the i-th bit of Cyclic Redundancy Check (CRC) of the PSCCH scheduling the PSSCH, and L = 24, which is the number of bits of the CRC of the PSCCH.

Two frequency domain DMRS patterns, i.e., DMRS frequency domain type 1 and DMRS frequency domain type 2, are supported in the NR PDSCH and PUSCH, and for each frequency domain type, there are two different types, single-DMRS-symbol and dual-DMRS-symbol. Single-symbol DMRS frequency domain type 1 supports 4 DMRS ports, and single-symbol DMRS frequency domain type 2 can support 6 DMRS ports. In the case of dual-DMRS-symbol, the number of supported ports is doubled. However, in NR-V2X, since the PSSCH only needs to support two DMRS ports at most, as illustrated in FIG. 8, only the single-symbol DMRS frequency domain type 1 is supported.

**Determination of Frequency domain Resources in NR-V2X**

Similar to LTE-V2X, the frequency domain resources in the NR-V2X resource pool are also continuous, and the allocation granularity of the frequency domain resources is also subchannel. The number of PRBs included in one subchannel is {10, 12, 15, 20, 50, 75, 100}, the size of the smallest subchannel is 10 PRBs, which is larger than the size of 4 PRBs of the smallest subchannel in LTE-V2X. The main reason is that the frequency domain resources of the PSCCH in NR-V2X are located in the first subchannel of the PSSCH associated with the PSCCH, the size of frequency domain resources of PSCCH is smaller than or equal to the size of one subchannel of PSSCH, while the time domain resources of the PSCCH occupy 2 or 3 OFDM symbols, and if the configured size of the subchannel is relatively small, it will result in very few available resources for the PSCCH, the increased bit rate, and the reduced detection performance of the PSCCH. In the NR-V2X, the size of the subchannel of the PSSCH and the size of the frequency domain resources of the PSCCH are independently configured, but it is necessary to ensure that the size of the frequency domain resources of the PSCCH is smaller than or equal to the size of the subchannel of the PSSCH.

The following configuration parameters in the configuration information of the NR-V2X resource pool are used to determine frequency domain resources of the PSCCH and PSSCH resource pools.

The size of a subchannel (sl-SubchannelSize) indicates the number of consecutive PRBs included in a subchannel in the resource pool, and the value range of the number is {10, 12, 15, 20, 50, 75, 100} PRBs.

The number of subchannels (sl-NumSubchannel) indicates the number of subchannels included in the resource pool.

The index of the start RB in the subchannel (sl-StartRB-Subchannel) indicates the index of the start PRB in the first subchannel in the resource pool.

The number of PRBs (sl-RB-Number) indicates the number of consecutive PRBs included in the resource pool.

The PSCCH frequency domain resource indication (sl-FreqResourcePSCCH) indicates the size of frequency domain resources of the PSCCH, and the value range of the size is {10, 12, 15, 20, 25} PRB.

When the UE determines a resource pool for sending the PSSCH or for receiving the PSSCH, the frequency domain resources included in the resource pool are sl-NumSubchannel consecutive subchannels starting from the PRB indicated by sl-StartRB-Subchannel, and if the final number of PRBs included in the sl-NumSubchannel consecutive subchannels is less than the number of PRBs indicated by sl-RB-Number, the remaining PRBs cannot be used for sending or receiving the PSSCH.

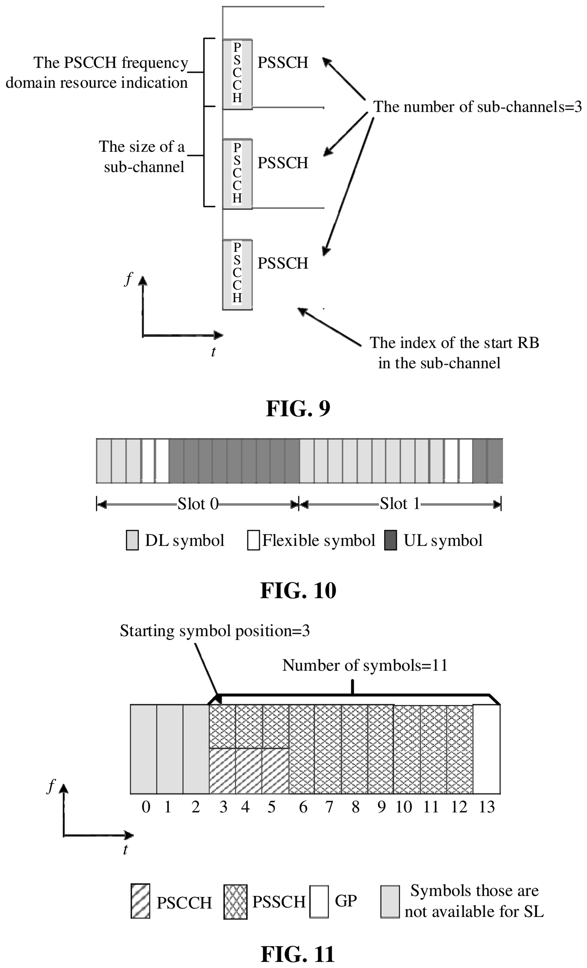

In the NR-V2X, as illustrated in FIG. 9, since the PSCCH is aligned with the frequency domain start position of the first subchannel of the PSSCH associated with the PSCCH, the start position of each subchannel of the PSSCH is the possible frequency domain start position of the PSCCH, and the frequency domain ranges of the resource pools of the PSCCH and the PSSCH may be determined according to the above parameters.

In the NR-V2X, the PSCCH is used to carry the following Sidelink Control Information (SCI) related to resource sensing: a priority of the scheduled transmission; a frequency domain resource allocation indicating the number of frequency domain resources of the PSSCH in the current slot scheduled by the PSCCH, and a start position and the number of frequency domain resources of at most two reserved retransmission resources; a time domain resource allocation indicating time domain positions of at most two retransmission resources; a reference signal pattern of the PSSCH; the second-order SCI format; the second-order SCI code rate offset; the number of PSSCH DMRS ports; Modulation and Coding Scheme (MCS); MCS form indication; the number of PSFCH symbols; the resource reservation period reserving resources for sending another Transport Block (TB) in the next period, reserved bits being 2 to 4 bits. If the inter-TB resource reservation is not activated in the configuration of the resource pool, the information bit field of the resource reservation period does not exist. The specific number of bits in the reserved bits is configured by the network or pre-configured.

Since the PSCCH is always sent within a slot with the scheduled PSSCH, and the start position of the PRBs occupied by the PSCCH is the start position of the first subchannel of the scheduled PSSCH, the time-frequency domain start position of the scheduled PSSCH is not explicitly indicated in the SCI format 1-A.

## Determination of Time domain Resources (Slots) in NR-V2X

In the NR-V2X, the transmission of PSCCH/PSSCH is based on the slot level, that is, only one PSCCH/PSSCH can be transmitted in one slot, and it is not supported that multiple PSCCH/PSSCH are transmitted in one slot by the Time Division Multiplexing and Multiplexer (TDM) manner. A slot may be multiplexed by the PSCCH/PSSCH for different users by the Frequency Division Multiplexing (FDM) manner. The time domain resources of the PSSCH in the NR-V2X are in a granularity of slot, but unlike LTE-V2X where the PSSCH occupies all the time domain symbols in one subframe, the PSSCH in the NR-V2X may occupy a part of symbols in one slot. The main reason is that in the LTE system, uplink or downlink transmission is also performed in granularity of subframe. Therefore, the SL transmission is also performed in granularity of subframe (special subframes in the Time Division Duplex (TDD) system are not used for SL transmission). In the NR system, flexible slot structure is adopted, that is, a slot includes both uplink symbols and downlink symbols, so that more flexible scheduling can be realized and the time delay can be reduced. A subframe in a typical NR system is illustrated in FIG. 10. A slot may include Downlink (DL) symbols, Uplink (UL) symbols, and Flexible symbols. The DL symbols are located at the start position of the slot, the UL symbols are located at the end position of the slot, the Flexible symbols are between the DL symbols and the UL symbols, and the numbers of various types of symbols in each slot are configurable.

As described above, the SL transmission system may share the carrier with the cellular system. In this case, the SL transmission can only use the UL transmission resources of the cellular system. For the NR-V2X, if the SL transmission still needs to occupy all time domain symbols in a slot, the network needs to configure a slot with all uplink symbols for the SL transmission, which will greatly affect the UL and DL data transmission in the NR system and reduce the performance of the system. Therefore, in the NR-V2X, a part of the time domain symbols in a slot are supported for SL transmission, that is, a part of the UL symbols in a slot are used for the SL transmission. In addition, it is considered that the AGC symbol and the GP symbol are included in the SL transmission, if the number of UL symbols available for the SL transmission is too small, there are fewer symbols available for transmitting valid data after removing the AGC symbol and the GP symbol, so the resource utilization rate is very low. Therefore, the number of time domain symbols occupied by the SL transmission in the NR-V2X is at least 7 (including the GP symbol). When the SL transmission system uses a proprietary carrier, in this case, there is no problem of sharing transmission resources with other systems, and all symbols in the slot can be configured to be used for the SL transmission.

In the NR-V2X, the starting point and length of the time domain symbols used for SL transmission in a slot are configured by using the parameters sl-StartSymbol and sl-LengthSymbols. The last symbol in the time domain symbols used for SL transmission is used as GP, and the PSSCH and PSCCH can only use the remaining time domain symbols, but if a PSFCH transmission resource is configured in a slot, the PSSCH and PSCCH cannot occupy the time domain symbols used for the PSFCH transmission and the AGC symbol and GP symbol before the symbol.

As illustrated in FIG. 11, the network configures that starting symbol position is 3 and the number of symbols is 11, that is, 11 time domain symbols starting from the symbol with the index 3 in a slot may be used for the SL transmission. Here, symbol 3 is usually used as the AGC symbol, symbol 13 is used as a GP, and the remaining symbols may be used for PSCCH and PSSCH transmission. The PSCCH occupies two time domain symbols, but since the data on the AGC symbol is a copy of the data on the second SL symbol, the first SL symbol also includes PSCCH data.

In the NR-V2X system, the time domain resources in the resource pool are also indicated by the bitmap. The flexible slot structure in the NR system is considered, and the length of the bitmap is also extended, and the supported length range of the bitmap is [10: 160]. The manner for determining the slot position belonging to the resource pool in a System Frame Number (SFN) period by using the bitmap to is the same as that in the LTE-V2X, but there are the following two differences.

- The total number of slots included in one SFN period is $10240 \times 2^{\mu}$. Where, the parameter $\mu$ is related to the size of the subcarrier spacing.
- If at least one time domain symbol of the time domain symbols Y, Y+1, Y+2... Y+X-1 included in a slot is not configured as an uplink symbol by TDD-UL-DL-ConfigCommon signaling of the network, the slot cannot be used for the SL transmission. Where, Y and X represent sl-StartSymbol and sl-LengthSymbols, respectively.

The manner specifically includes the following operations.

The first operation is that slots that do not belong to the resource pool, including synchronization slots and slots that cannot be used for the SL transmission, etc., are removed in the SFN period. The remaining slots are represented as the remaining slot set. The remaining slots are renumbered as $(l_0, l_1, \cdots, l_{(10240\times 2^{\mu}-N_{S\_SSB}-N_{nonSL}-1)})$.

Here, $N_{S\_SSB}$ represents the number of synchronization slots in one SFN period. The synchronization slots are determined according to the synchronization-related configuration parameter, which is related to the period of transmission of the Synchronization Signal Block (SSB), the number of transmission resources of the SSB configured in the period, and the like.

$N_{nonSL}$ represents the number of slots that do not conform to the configurations of the starting point and number of uplink symbols in one SFN period. If at least one time domain symbol of the time domain symbols Y, Y+1, Y+2... Y+X-1 included in a slot is not semi-statically configured as an uplink symbol, the slot cannot be used for the SL transmission. Here, Y and X represent sl-StartSymbol and sl-LengthSymbols, respectively.

In the second operation, the number of reserved slots and the corresponding time domain positions are determined.

If the number of slots in the remaining slot set cannot be divisible by the length of the bitmap, the number of reserved slots and the corresponding time domain positions need to be determined. Specifically, if a slot $l_r$ ($0 \leq r < 10240 \times 2^{\mu} - N_{S\_SSB} - N_{nonSL}$) satisfies the following condition, the slot is a reserved slot:

$$r = \left\lfloor \frac{m \cdot (10240 \times 2^{\mu} - N_{S\_SSB} - N_{nonSL})}{N_{reserved}} \right\rfloor$$

Here, $N_{reserved} = (10240 \times 2^{\mu} - N_{S\_SSB} - N_{nonSL})$ *mod* $L_{bitmap}$ represents the number of reserved slots, $L_{bitmap}$ represents the length of the bitmap, and $m = 0,..., N_{reserved}-1$.

In the third operation, the reserved slots are removed from the remaining slot set. The remaining slot set is represented as a logical slot set. All slots in the slot set are slots available for the resource pool. The slots in the logical slot set are numbered as ($t_0^{SL}, t_1^{SL}, \ldots, t_{T_{max}-1}^{SL}$). Here, $T_{max} = 10240 \times 2^{\mu} - N_{S\_SSB} - N_{nonSL} - N_{reserved}$.

In the fourth operation, slots, belonging to the resource pool, in the logical slot set are determined according to the bitmap.

The bitmap in the configuration information of the resource pool is ($b_0, b_1, ..., b_{L_{bitmap}-1}$). For a slot $t_k^{SL}\left(0 \leq k < \left(10240 \times 2^{\mu} - N_{S\_SSB} - N_{nonSL} - N_{reserved}\right)\right)$ in the logical slot set, when $b_{k'} = 1$ is satisfied, the slot is a slot belonging to the resource pool. Here, $k' = k$ *mod* $L_{bitmap}$.

In the fifth operation, the slots belonging to the resource pool determined in the fourth operation are numbered

sequentially as $t'^{SL}_i$, and $i \in \{0, 1, ..., T'_{max} - 1\}$. Here, $T'_{max}$ represents the number of slots included in the resource pool.

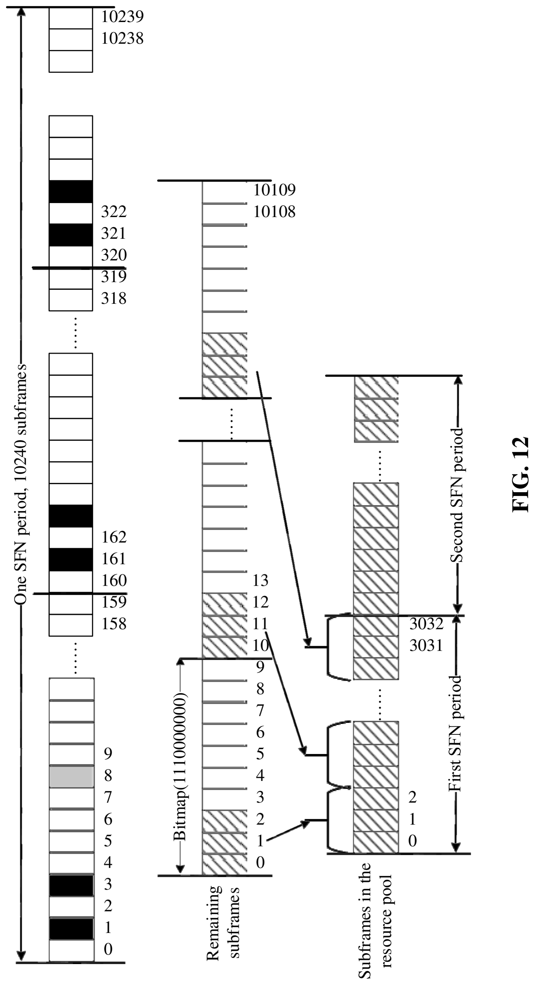

As illustrated in FIG. 12, one SFN period (or Direct Frame Number (DFN) period) includes 10240 subframes, the period of the synchronization signal is 160 ms, and two synchronization subframes are included in one synchronization period. Therefore, there are 128 synchronization subframes in one SFN period. The length of the bitmap used to indicate the time domain resources in the resource pool is 10 bits, so two reserved subframes are needed. The number of remaining subframes is 10110 (10240-128-2=10110), which can be divisible by the length 10 of the bitmap. The remaining subframes are renumbered as 0, 1, 2... 10109. The first 3 bits of the bitmap are 1 and the remaining 7 bits are 0. That is, in the remaining subframes, the first 3 subframes of every 10 subframes belong to the resource pool, while the remaining subframes do not belong to the resource pool. Since the bitmap needs to be repeated 1011 times for the remaining subframes to indicate whether all subframes belong to the resource pool, and each bitmap period includes 3 subframes, 3033 subframes in total belong to the resource pool in one SFN period.

**Mode 2 Resource Selection in NR V2X**

In the NR-V2X, Mode 2 resource selection is supported, that is, the UE excludes resources reserved by other UEs according to the detected PSCCHs sent by other UEs, and selects a resource for data transmission among the remaining resources.

The Mode 2 resource selection is performed according to the following two operations.

In the first operation, the UE takes all available resources in the resource selection window as the resource set A.

If the UE sends data in some slots in the sensing window and does not sense, all resources, of these slots, in the corresponding slots in the selection window are excluded. The UE determines the corresponding slots in the selection window by using the value set of the "resource reservation period" field in the configuration of the used resource pool.

If the PSCCH is sensed by the UE in the sensing window, the Reference Signal Received Power (RSRP) of the PSCCH or the RSRP of the PSSCH scheduled by the PSCCH is measured. If the measured RSRP is greater than the SL-RSRP threshold, and it is determined, according to the resource reservation information in the SCI transmitted in the PSCCH, that the reserved resource is within the resource selection window, the corresponding resource is excluded from the set A. If the remaining resources in the resource set A are less than X% of all resources in the resource set A before resource exclusion, the SL-RSRP threshold is raised by 3 dB, and the first operation is re-performed. The possible values of the above X are {20, 35, 50}, and the UE determines the parameter X from the value set according to the priority of the data to be sent. At a same time, the above SL-RSRP threshold is related to the priority carried in the PSCCH sensed by the UE and the priority of data to be sent by the UE. The UE takes the remaining resources after resource exclusion in the set A as a candidate resource set.

In the second operation, the UE randomly selects several resources from the candidate resource set as transmission resources for initial transmission and retransmission.

**SL-based positioning**

The 3GPP RAN conducted research on "NR positioning enhancements" and "scenarios and requirements for in-coverage, partial-coverage, and out-of-coverage NR positioning use cases". The research "scenarios and requirements for in-coverage, partial-coverage, and out-of-coverage NR positioning use cases" focuses on V2X and public safety use cases. In addition, Security Association 1 (SA1) has formulated requirements for "range-based services" and formulated positioning accuracy requirements for Industrial Internet of Things (IIoT) use case in the out-of-coverage scenario. 3GPP needs to research and develop SL positioning solutions to support the use cases, scenarios, and requirements determined in these activities. In order to improve the positioning accuracy, especially to realize the positioning of UE located outside the coverage of cellular network, 3GPP introduces SL PRS based positioning. According to the current conclusion, the SL PRS may be sent in a dedicated resource pool, however, in order to support SL positioning and SL communication, the UE further needs to send and receive UE mutual discovery information related to SL positioning, configuration information related to SL positioning, measurement reporting information related to SL positioning, control and data information related to SL communication, and the like, and these information need to be carried through a SL channel, such as PSCCH and/or PSSCH.

**Sidelink Over Unlicensed Spectrum (SL-U)**

When performing SL-U, SL sending needs to satisfy specific regulatory requirements, which include minimum Occupied Channel Bandwidth (OCB) and maximum Power Spectral Density (PSD) requirements. For the requirement for OCB, when the UE uses the channel for data transmission, the channel bandwidth occupied by the UE is not less than 80% of a channel bandwidth. For the requirement for maximum PSD, the power of UE for sending per 1 MHz cannot be more than 10 dBm. In order to satisfy the requirements for OCB and PSD regulations, an Interlaced Resource Block (IRB) structure needs to be used for the SL-U. One IRB includes N RBs discrete in the frequency domain, a total of m IRBs are included in the band range, and the RBs included in the m-th IRB are {m, m + m, 2M + m, 3M + m,...}.

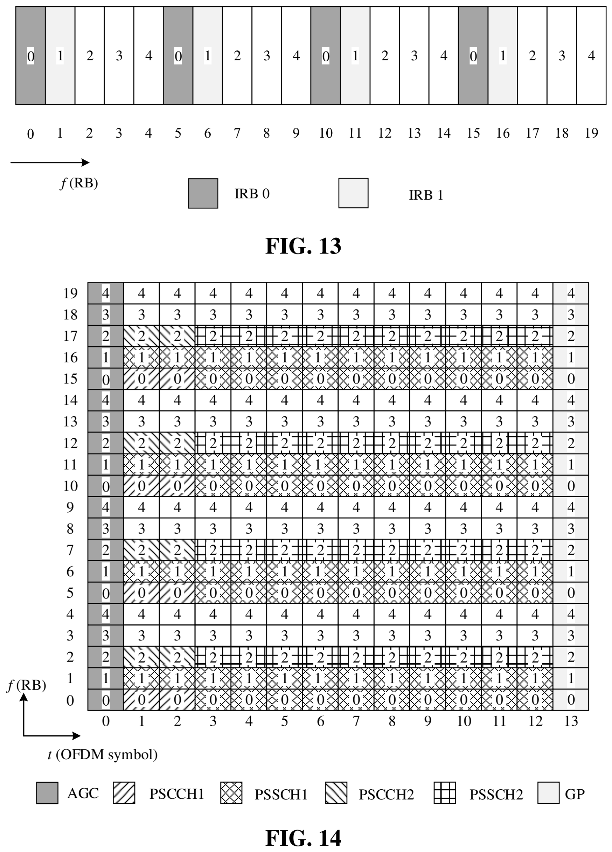

As illustrated in FIG. 13, the system bandwidth includes 20 RBs, and includes 5 IRBs (i.e., M = 5). Each IRB includes 4 RBs (i.e., N = 4). The frequency domain intervals of two adjacent RBs belonging to the same IRB are the same, that is, the interval is 5 RBs. The numbers in the boxes in the figure represent IRB indexes.

In the SL-U system, if IRB-based resource allocation granularity is adopted, channels such as PSCCH and PSSCH in the SL-U system should be based on IRB structure. In this case, the frame structure of the SL-U system is illustrated in FIG. 14, and the numbers in the boxes in the figure represent the IRB index. FIG. 14 is a schematic diagram of a frame structure in which only PSCCH and PSSCH are included in a slot, and PSFCH is not included. The bandwidth illustrated in FIG. 14 includes 20 RBs, 5 IRB resources are configured, that is, M = 5, each IRB resource includes 4 RBs, and the numbers in the boxes represent the IRB index. In FIG. 14, the system configures that the PSCCH occupies one IRB resource, the time domain occupies two OFDM symbols, the PSSCH takes IRB as granularity, the first symbol in the slot is an AGC symbol, and the last symbol in the slot is a GP symbol. In FIG. 14, PSSCH1 occupies IRB # 0 and IRB # 1, and the PSCCH1 corresponding to the PSSCH 1 occupies IRB # 0. PSSCH2 occupies IRB # 2, and the PSCCH2 corresponding to the PSSCH2 also occupies IRB # 2. It should be noted that for the sake of simplification, resources occupied by the second-order SCI and resources occupied by the PSCCH DMRS and the PSSCH DMRS are not drawn in FIG. 14.

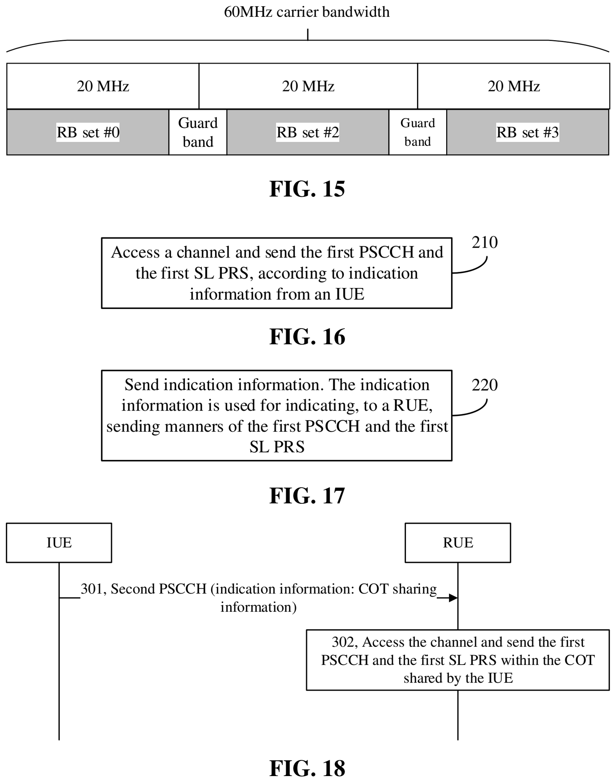

On the unlicensed spectrum, the UE accesses the channel through LBT. As illustrated in FIG. 15, the LBT takes 20 MHz as the granularity in the frequency domain, and every 20 MHz is called an RB Set. A carrier may include multiple RB sets, and there is a guard interval between the different RB Sets.

### LBT channel access manner

The UE performs LBT on a carrier in the unlicensed spectrum after the arrival of a service, and starts to send a signal on the carrier after the LBT is successful. The manner for the LBT includes a Type 1 LBT channel access manner and a Type 2 LBT channel access manner.

The Type1 LBT channel access manner is multi-slot channel detection based on random backoff with contention window size adjustment. A corresponding Channel Access Priority Class (CAPC) may be selected according to the priority of a service to be transmitted. The Type1 LBT channel access manner is mainly used for a communication device to initiate channel occupancy. When the UE in the SL-U system successfully accesses the channel through the Type1 LBT channel access manner, the transmission resources can be shared with other UEs in the SL-U system, that is, the Channel Occupancy Time (COT) sharing mechanism. Other UEs can use the shared channel through the Type2 LBT channel access manner, which can improve the channel access success rate and transmission efficiency of the SL-U UE.

The Type2 LBT channel access manner is a channel access manner based on a fixed-length monitoring slot. The Type2 LBT channel access manner includes a Type2A LBT channel access manner, a Type2B LBT channel access manner, and a Type2C LBT channel access manner.

Type2A LBT channel access manner: the channel detection manner of the UE is 25μs (microsecond) single-slot channel detection. Specifically, in the Type2A LBT channel access manner, the UE may perform channel monitoring for 25 μs before starting transmission, and perform transmission after the channel monitoring is successful.

Type2B LBT channel access manner: the channel detection method of the UE is 16 μs single-slot channel detection. Specifically, in the Type2B LBT channel access manner, the UE may perform channel monitoring for 16 μs before starting transmission, and perform transmission after the channel monitoring is successful. The interval between the starting position of the transmission and the end position of the previous transmission is 16 μs.

Type2C LBT channel access manner: the UE transmits without channel detection after the end of the interval. Specifically, in the Type 2C LBT channel access manner, the UE may directly perform transmission. The interval between the starting position of the transmission and the end position of the previous transmission is less than or equal to 16 μs. The length of the transmission is not more than 584 μs.

FIG. 16 illustrates a flowchart of a method for sending a SL PRS according to an embodiment of the present disclosure. The method may be applied to a RUE. The method includes the following operation.

In operation 210, a channel is accessed and the first PSCCH and the first SL PRS are sent according to indication information from an IUE.

Here, the IUE is a UE that shares the COT, and the RUE is a UE that the IUE shares the COT with. After the LBT is successful, the IUE can share the COT with other UEs. The UE with which the IUE shares the COT may be called a RUE.

Alternatively, the IUE is a UE that shares the occupied transmission resources with other UEs after the LBT is successful. The RUE is a UE that uses transmission resources shared by the IUE.

Both the IUE and the RUE are UEs in the SL-U system. Both the IUE and the RUE may send the SL PRS.

The IUE sends the indication information, and the RUE receives the indication information sent by the IUE.

The indication information is used to indicate the COT shared by the IUE, and/or the indication information is used to indicate the channel access manner, and/or the indication information is used to indicate the latest time at which the channel is accessed by using the specific channel access manner, and/or the indication information is used to indicate the transmission resources shared by the IUE. The channel access manner includes at least one of: a type 1 LBT (channel access) manner or a type 2 LBT (channel access) manner. The Type 2 LBT manner includes at least one of: a Type 2A LBT manner, a Type 2B LBT manner, and a Type 2C LBT manner.

The RUE sends the first PSCCH and the first SL PRS within the COT shared by the IUE according to the indication information, and/or the RUE accesses the channel by using the channel access manner indicated in the indication information, and sends the first PSCCH and the first SL PRS, and/or the RUE accesses the channel by using the specific channel access manner before the latest time, and sends the first PSCCH and the first SL PRS, and/or the RUE sends the first PSCCH and the first SL PRS on the transmission resources indicated by the indication information, and/or the RUE accesses the channel by using the channel access manner indicated in the indication information, and sends the first PSCCH and the first SL PRS on the transmission resources indicated by the indication information.

Alternatively, the RUE is allowed to access the channel by the manner indicated in the indication information and send the first PSCCH and the first SL PRS.

The transmission resources for sending the first PSCCH and the first SL PRS by the RUE are transmission resources on the unlicensed spectrum. The first PSCCH is used to indicate a sending of the first SL PRS, and/or the first PSCCH is used to indicate a reserved resource for sending the SL PRS.

In summary, in the method provided by the present embodiment, the IUE sends indication information, so that the RUE accesses the channel and sends the first PSCCH and the first SL PRS, according to the indication information. The IUE may share the COT with the RUE through the indication information, so that the UE that sends the SL PRS on the unlicensed spectrum may be shared with the COT.

FIG. 17 illustrates a flowchart of a method for sending a SL PRS according to an embodiment of the present disclosure. The method may be applied to an IUE. The method includes the following operation.

In operation 220, indication information is sent. The indication information is used for indicating, to a RUE, a sending manner of the first PSCCH and the first SL PRS.

The IUE sends the second PSCCH, and the Sidelink Control Information (SCI) carried by the second PSCCH includes a bit field for indicating the indication information.

Alternatively, the IUE sends the second PSCCH and the second SL PRS, and the SCI carried by the second PSCCH includes a bit field for indicating the indication information.

In summary, in the method provided by the present embodiment, the IUE sends the indication information, so that the RUE accesses the channel and sends the first PSCCH and the first SL PRS, according to the indication information. The IUE may share the COT with the RUE through the indication information, so that the COT can be shared with the UE that sends the SL PRS on the unlicensed spectrum.

Exemplarily, the IUE may indicate, to the RUE, the channel access manner and the sending manner of the PSCCH and the SL PRS by using at least one of the following manners.

Manner 1: The indication information includes COT sharing information, and the RUE is allowed to send the first PSCCH and the first SL PRS within the COT.

Manner 2: The indication information includes trigger information, the RUE is allowed to send the first PSCCH and the first SL PRS within the COT indicated by the first trigger information, and the RUE is allowed to send the first PSCCH and the first SL PRS before the latest sending time indicated by the second trigger information.

Manner 3: The indication information includes transmission resources and a channel access manner, and the RUE is allowed to access the channel by using a specified channel access manner, and to send the first PSCCH and the first SL PRS on the specified transmission resources.

Manner 4: The indication information indicates a channel access manner and a sending manner of the first PSCCH and a channel access manner and a sending manner of the first SL PRS, respectively.

The above manners will be described below.

**Manner 1: The indication information includes COT sharing information, and the RUE is allowed to send the first PSCCH and the first SL PRS within the COT.**

FIG. 18 illustrates a flowchart of a method for sending a SL PRS according to an embodiment of the present disclosure. The method may be applied to an IUE and a RUE. The method includes the following operations.

In operation 301, the IUE sends the second PSCCH, the SCI carried by the second PSCCH includes a bit field for indicating COT sharing information, and the indication information includes the COT sharing information.

The RUE receives the COT sharing information sent by the IUE, and the COT sharing information includes a COT length and a Channel Access Priority Class (CAPC) value.

Alternatively, the RUE receives the second PSCCH sent by the IUE, the second PSCCH carries SCI, and the COT sharing information is indicated by at least one bit field in the SCI. The CAPC value is indirectly indicated by the priority field in the SCI, and a length of the bit field for indicating the COT length (COT length bit field) is $A+2^{\mu}-1$. Here, A is a positive integer determined according to a network configuration or a pre-configuration, and $\mu$ is a subcarrier spacing index of a current carrier.

For example, the CAPC value of the COT sharing information may be indirectly indicated by a priority field in the SCI, that is, as illustrated in Table 2, the value indicated by the priority field corresponds to a CAPC value.

Table 2

| Value of the priority field (lowest bit is on the far right) | Corresponding CAPC value |
|---|---|
| 000 | 1 |
| 001 | 1 |
| 010 | 2 |
| 011 | 2 |
| 100 | 3 |
| 101 | 3 |
| 110 | 4 |
| 111 | 4 |

The COT length is indicated by another bit field in the SCI, and the length of the bit field is $A+2^{\mu}-1$ bits. As shown in Table 3, $\mu$ is the subcarrier spacing index of the current carrier. A is a positive integer determined according to the network configuration or pre-configuration. For example, A is 3 by default, and A is 4 if the parameters absenceOfAnyOther-Technology-r14 or absenceOfAnyOtherTechnology-r16 are configured by the network or are pre-configured. The value of the bit field represents the remaining COT after the slot in which the SCI is located. For example, when A = 3 and $\mu$ = 0, the COT length can be determined according to the value of the COT length bit field with reference to Table 4. For example, when the value of the bit field is 000, the COT is: there are 0 slots after the slot where the SCI on the second PSCCH is located, and when the value of the bit field is 110, the COT is: there are 6 slots after the slot where the SCI on the second PSCCH is located.

Table 3

| $\mu$ | Subcarrier spacing$\Delta f$ |
|---|---|
| 0 | 15 |
| 1 | 30 |
| 2 | 60 |
| 3 | 120 |
| 4 | 240 |
| 5 | 480 |
| 6 | 960 |

Table 4

| Value of COT length bit field (A = 3, $\mu$=0) | COT length (relative to the slot where the SCI is located) |
|---|---|
| 000 | 0 slots |
| 001 | 1 slot |
| 010 | 2 slots |
| 011 | 3 slots |
| 100 | 4 slots |
| 101 | 5 slots |
| 110 | 6 slots |
| 111 | 7 slots |

In operation 302, the RUE accesses the channel and sends the first PSCCH and the first SL PRS within the COT shared by the IUE.

In a case that the RUE satisfies a COT sharing condition, the RUE is allowed to send the first PSCCH and the first SL PRS within a COT shared by the IUE.

In a case that the COT sharing information is received by the RUE, if the RUE satisfies the COT sharing condition, the RUE may send the first PSCCH and the first SL PRS within the COT indicated by the COT length. The COT sharing condition may be specified by the protocol. Alternatively, the COT sharing condition may be indicated by the IUE. For example, the COT sharing information sent by the IUE further includes the COT sharing condition, and the RUE can send the PSCCH and the SL PRS by using the COT indicated by the COT length only when the COT sharing condition is satisfied.

The COT sharing condition includes at least one of: the RUE is a receiving UE of SL sending within the COT from the IUE; the IUE is a receiving UE of the first SL PRS sent by the RUE; or a CAPC value corresponding to the first SL PRS sent by the RUE is less than or equal to a CAPC value indicated in the COT sharing information sent by the IUE. The SL sending may refer to the SL PRS sent by the IUE, or the SL sending may refer to SL data (TB) sent by the IUE.

For example, the RUE may be allowed to use the COT shared by the IUE in a case that the above three conditions are all satisfied simultaneously.

The RUE may access the channel by using a Type 1 LBT manner, and send the first PSCCH and the first SL PRS within the COT shared by the IUE. Alternatively, the RUE may access the channel by using a Type 2 LBT manner, and send the first PSCCH and the first SL PRS within the COT shared by the IUE.

The first SL PRS sent by the RUE may be used for SL positioning between the RUE and the IUE, that is, the receiver of the first SL PRS sent by the RUE is the IUE. Alternatively, the first SL PRS sent by the RUE may be used for SL positioning between the RUE and other UE, that is, the receiver of the first SL PRS sent by the RUE is the other UE (which is not the IUE).

In summary, in the method provided by the present embodiment, the IUE sends the COT sharing information to the RUE, so that the RUE can send the PSCCH and the SL PRS by using the COT shared by the IUE when the COT sharing condition is satisfied. A method for sharing the COT with the UE that sends the SL PRS on unlicensed spectrum is provided, thereby improving channel access success rate and transmission efficiency of the SL-U UE, and improving positioning accuracy.

**Manner 2: The indication information includes trigger information, the RUE is allowed to send the first PSCCH and the first SL PRS within the COT indicated by the first trigger information, and the RUE is allowed to send the first PSCCH and the first SL PRS before the latest sending time indicated by the second trigger information.**

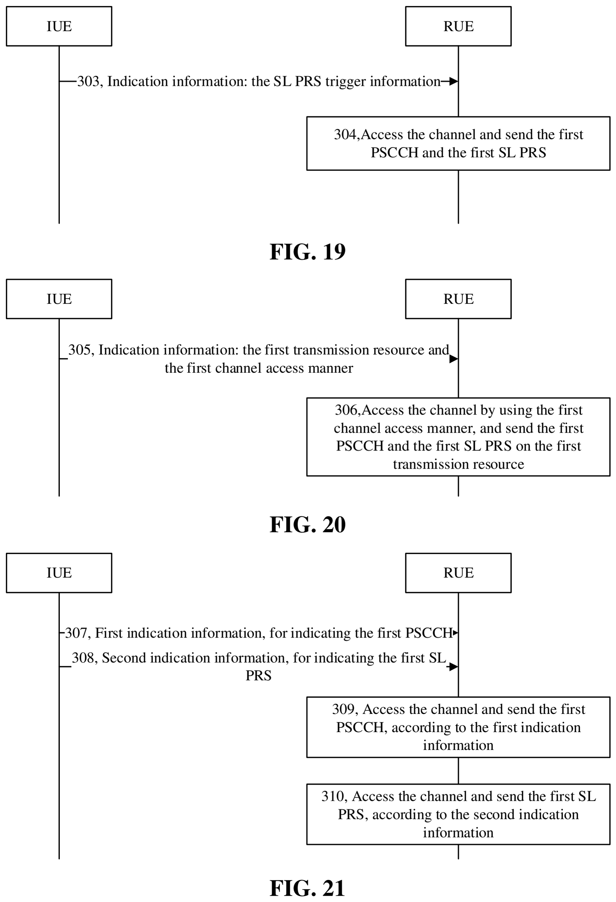

FIG. 19 illustrates a flowchart of a method for sending a SL PRS according to an embodiment of the present disclosure. The method may be applied to the IUE and the RUE. The method includes the following operations.

In operation 303, the IUE sends SL PRS trigger information, and the indication information includes the SL PRS trigger information.

The SL PRS trigger information includes the second PSCCH and/or the second SL PRS. The SL PRS trigger information is used to trigger the RUE to send the SL PRS. The RUE sends the first PSCCH and the first SL PRS in response to receiving the SL PRS trigger information.

When the RUE sends the SL PRS according to the SL PRS trigger information from the IUE, the COT shared by the IUE may be used. Alternatively, if the RUE sends the SL PRS according to the SL PRS trigger information from the IUE, and the time at which the RUE sends the SL PRS is before the latest time indicated by the IUE, the RUE may access the channel through the Type 2 LBT.

Based on the above two cases, the SL PRS trigger information may include the first SL PRS trigger information and/or the second SL PRS trigger information. The second PSCCH of the first SL PRS trigger information includes a COT length. The second PSCCH of the second SL PRS trigger information includes the latest time, and/or the second PSCCH of the second SL PRS trigger information includes the latest time and the channel access manner (Type 2 LBT manner).

When the trigger information includes the first SL PRS trigger information, i.e., the indication information includes the first SL PRS trigger information sent by the IUE to the RUE, the first SL PRS trigger information includes the second PSCCH and/or the second SL PRS sent by the IUE, and the SCI in the second PSCCH includes a bit field for indicating the COT length. The manner for indicating the COT length may refer to the manner for indicating the COT length in the first manner.

The RUE is allowed to send the first PSCCH and the first SL PRS within the COT shared by the IUE.

The IUE sends the second PSCCH and/or the second SL PRS to trigger the RUE to send the SL PRS, and there is a specific bit field in the SCI carried by the second PSCCH to indicate the COT length. The COT shared by the IUE may be used when the RUE sends the first SL PRS.

When the trigger information includes the second SL PRS trigger information, i.e., the indication information includes the second SL PRS trigger information sent by the IUE to the RUE, the second SL PRS trigger information includes the second PSCCH and/or the second SL PRS sent by the IUE, and the SCI in the second PSCCH includes a bit field for indicating the latest time.

The RUE is allowed to send the first PSCCH and the first SL PRS before the latest time indicated by the IUE. Alternatively, the RUE is allowed to access the channel by using a Type 2 LBT manner before the latest time and to send the first PSCCH and the first SL PRS before the latest time.

The RUE receives the second SL PRS trigger information from the IUE. The second SL PRS trigger information indicates the latest time at which the RUE can access the channel by using the Type 2 LBT manner. The manner for indicating the latest time may refer to the manner for indicating the COT in the first manner. The RUE may access the channel by using the Type 2 LBT manner when sending the first SL PRS and the first PSCCH indicating the first SL PRS before the latest time.

The manner for indicating the latest time may refer to the manner for indicating the COT length. That is, a bit field for indicating the latest time (latest time bit field) is included in the SCI. The length of the latest time bit field may be $B+2^{\alpha}-1$ bits. Here, $\alpha$ is the subcarrier spacing index of the current carrier, B is a positive integer determined according to network configuration or pre-configuration. The latest time indication table is obtained according to the values of $\alpha$ and B, and the latest time indication table includes the value of the latest time bit field and the corresponding latest time, and then the corresponding latest time may be obtained according to the value of the latest time bit field.

In operation 304, the RUE accesses the channel and sends the first PSCCH and the first SL PRS.

The RUE may access the channel and send the first PSCCH and the first SL PRS in response to the SL PRS trigger information from the IUE.

The RUE may access the channel by using the Type 2 LBT manner and send the first PSCCH and the first SL PRS within the COT shared by the IUE, in response to the first SL PRS trigger information from the IUE. The COT shared by the IUE may be indicated by the second PSCCH. Of course, the RUE may access the channel by using the Type 1 LBT manner.

The RUE may access the channel by using the Type 2 LBT manner and send the first PSCCH and the first SL PRS before the latest time, in response to the second SL PRS trigger information from the IUE. The latest time may be indicated by the second PSCCH. Of course, the RUE may access the channel by using the Type 1 LBT manner.

Alternatively, when the IUE and the RUE perform relative positioning, the IUE may send SL PRS trigger information to the RUE to trigger the RUE to send the first SL PRS, and the IUE may receive the first SL PRS to perform the relative positioning with the RUE.

In summary, in the method provided by the present embodiment, the IUE sends the SL PRS trigger information to the RUE to trigger the RUE to send the SL PRS. The SL PRS trigger information may indicate a COT length, and the RUE may send the PSCCH and the SL PRS within the COT. The SL PRS trigger information may indicate the latest time, and the RUE may access the channel by using the Type 2 LBT manner and send the PSCCH and the SL PRS before the latest time. A method for sharing the COT with the UE that sends the SL PRS on unlicensed spectrum is provided, thereby improving channel access success rate and transmission efficiency of the SL-U UE, and improving positioning accuracy.

In the method provided by the present embodiment, when the IUE and the RUE perform relative positioning by using a Round Trip Time (RTT) method, the IUE, when triggering the RUE to send the SL PRS, may simultaneously indicate whether the RUE can use the COT initiated by the IUE, that is, whether the RUE can access the channel by using the Type 2 LBT, which is beneficial to simplify the judgment rule of the COT sharing.

**Manner 3: The indication information includes transmission resources and a channel access manner, and the RUE is allowed to access the channel by using a specified channel access manner, and to send the first PSCCH and the first SL PRS on the specified transmission resources.**

FIG. 20 illustrates a flowchart of a method for sending a SL PRS according to an embodiment of the present disclosure. The method may be applied to the IUE and the RUE. The method includes the following operations.

In operation 305, the IUE sending indication information for the first transmission resource and the first channel access manner.

The indication information includes indication information, for the first transmission resource and the first channel access manner, sent by the IUE to the RUE. The first channel access manner includes a Type 2 LBT manner, and/or the first channel access manner includes a Type 1 LBT manner.

The first transmission resource includes a reserved transmission resource indicated by the IUE through the second PSCCH, and the first channel access manner is indicated in the second PSCCH.

The IUE sends the second PSCCH, and the SCI carried by the second PSCCH includes bit fields for indicating the first transmission resource and the first channel access manner.

In a case that the first transmission resource is located in the COT of the IUE, the IUE may indicate to the RUE that the channel is allowed to be assessed by using the Type 2 LBT manner. In a case that the first transmission resource is located outside the COT of the IUE, the IUE may indicate to the RUE that the channel is accessed by using the Type 1 LBT manner.

The resource for sending the SL PRS by the RUE is indicated by the IUE, and the IUE simultaneously indicates the channel access manner that the RUE uses when using the resource. For example, the RUE may send the SL PRS by using one or more resources reserved by the IUE through the second PSCCH, and the IUE further indicates, in the second PSCCH, the channel access manner that the RUE may use when using the reserved resource. If the resource indicated by the IUE is located in the COT initiated by the IUE, the IUE may instruct the RUE to access the channel by using the Type 2 LBT manner to use the reserved resource. Otherwise, the IUE should instruct the RUE to access the channel by using the Type 1 LBT manner to use the reserved resource.

In operation 306, the RUE accesses the channel by using the first channel access manner, and sends the first PSCCH and the first SL PRS on the first transmission resource.

In a case that the IUE configures the first transmission resource and the Type 2 LBT manner to the RUE, the RUE may access the channel by using the Type 2 LBT manner and send the first PSCCH and the first SL PRS on the first transmission resource. Alternatively, the RUE may access the channel by using the Type 1 LBT manner and send the first PSCCH and the first SL PRS on the first transmission resource. The first transmission resource is located in the COT shared by the IUE.

In a case that the IUE configures the first transmission resource and the Type 1 LBT manner to the RUE, the RUE may access the channel by using the Type 1 LBT manner and send the first PSCCH and the first SL PRS on the first transmission resource. The first transmission resource may be located in the COT shared by the IUE or may be located outside the COT shared by the IUE.

In summary, in the method provided by the present embodiment, the IUE may indicate, to the RUE, the channel access manner and the transmission resource when sending the SL PRS. The RUE may access the channel according to the channel access manner indicated by the IUE, and send the PSCCH and the SL PRS on the transmission resource indicated by the IUE. A method for sharing the COT with the UE that sends the SL PRS on unlicensed spectrum is provided, thereby improving channel access success rate and transmission efficiency of the SL-U UE, and improving positioning accuracy.

**Manner 4: The indication information indicates a channel access manner and a sending manner of the first PSCCH and a channel access manner and a sending manner of the first SL PRS, respectively.**

FIG. 21 illustrates a flowchart of a method for sending a SL PRS according to an embodiment of the present disclosure. The method may be applied to an IUE and a RUE. The method includes the following operations.

In operation 307, the IUE sends the first indication information, and the first indication information is used to indicate a channel access manner and/or a sending manner for sending the first PSCCH.

In the present embodiment, different COT sharing rules may be used for the first PSCCH and the first SL PRS that are sent by the RUE. For example, the COT sharing rule to be complied with when the RUE sends the first SL PRS may be any one of the above manners 1, 2, and 3. The COT sharing rule to be complied with when the RUE sends the first PSCCH may be any one of the above manners 1, 2, and 3, or may be another COT sharing rule.

When the RUE sends the second PSCCH, the COT shared by the IUE may be used or the Type 2 LBT channel access manner may be used when one of the following conditions is satisfied: a CAPC value indicated in the PSCCH sent by the RUE is less than or equal to a CAPC value indicated in the COT sharing information sent by the IUE; or since the resource reservation information indicated in the first PSCCH is information that the IUE must receive, the RUE can always use the COT shared by the IUE when sending the first PSCCH; or the RUE may determine, by using the above manner 1, manner 2, and manner 3, whether the COT information shared by the IUE can be used or whether can access the channel by using the Type2 LBT manner when sending the PSCCH.

That is, the first indication information includes at least one of: COT sharing information, SL PRS trigger information, the second transmission resource, or the second channel access manner. In a case that the PSCCH sharing condition is satisfied, the RUE is allowed to access the channel and send the first PSCCH according to the second indication information.

The PSCCH sharing condition includes at least one of the following conditions: a CAPC value indicated in the first PSCCH sent by the RUE is less than or equal to a CAPA value indicated in the COT sharing information sent by the IUE; resource reservation information indicated in the first PSCCH sent by the RUE is information received by the IUE; the RUE is a receiving UE of SL sending within the COT from the IUE; the IUE is a receiving UE of the first SL PRS sent by the RUE; a CAPC value corresponding to the first SL PRS sent by the RUE is less than or equal to the CAPC value indicated in the COT sharing information sent by the IUE; the first SL PRS trigger information sent by the IUE is received by the RUE; the second SL PRS trigger information sent by the IUE is received by the RUE; or indication information, for the second transmission resource and the second channel access manner, sent by the IUE, is received by the RUE. The first SL PRS trigger information includes the second PSCCH and/or the second SL PRS sent by the IUE, and SCI in the second PSCCH includes a bit field for indicating a COT length. The second SL PRS trigger information includes the second PSCCH and/or the second SL PRS sent by the IUE, the second SL PRS trigger information is used to indicate a latest time at which the RUE is allowed to access the channel by using a Type 2 LBT manner, and the SCI in the second PSCCH includes a bit field used to indicate the latest time.

In a case, the first indication information includes COT sharing information, and the COT sharing information includes a COT length, or the COT sharing information includes a COT length and a CAPC value. The first indication information is carried by the SCI in the second PSCCH, and the SCI carried by the second PSCCH includes at least one bit field for indicating the first indication information.

The first indication information includes COT sharing information, and in a case that the CAP A value indicated in the first PSCCH is less than or equal to the CAPC value indicated in the COT sharing information in the second PSCCH sent by the IUE, the RUE is allowed to access the channel by using the Type 2 LBT manner, and/or to send the first PSCCH by using the COT shared by the IUE.

The first indication information includes COT sharing information, and in a case that the receiving UE of the first PSCCH is the IUE, the RUE is allowed to access the channel by using the Type 2 LBT manner, and/or to send the first PSCCH by using the COT shared by the IUE.

The first indication information includes COT sharing information, and the RUE is allowed to access the channel by using the Type 2 LBT manner and/or to send the first PSCCH by using the COT shared by the IUE in a case that at least one of the following conditions is satisfied: the RUE is a receiving UE of the SL sending within the COT from the IUE; the IUE is a receiving UE of the first SL PRS sent by the RUE; or the CAPC value corresponding to the first SL PRS sent by the RUE is less than or equal to the CAPC value indicated in the COT sharing information sent by the IUE.

The first indication information includes SL PRS trigger information. When the first indication information includes the first SL PRS trigger information and the second PSCCH carries the COT length, the RUE is allowed to access the channel by using the Type 2 LBT manner and/or to send the first PSCCH by using the COT shared by the IUE. When the first indication information includes the second SL PRS trigger information and the second PSCCH carries the latest time, the RUE is allowed to access the channel by using the Type 2 LBT manner before the latest time, and/or to send the first PSCCH by using the COT shared by the IUE before the latest time.

The first indication information includes the second transmission resource and the second channel access manner. The RUE is allowed to access the channel by using the second channel access manner and to send the first PSCCH on the second transmission resource. When the second transmission resource is located in the COT shared by the IUE, the second channel access manner may be the Type 2 LBT manner or the Type 1 LBT manner. When the second transmission resource is located outside the COT shared by the IUE, the second channel access manner should be the Type 1 LBT manner.

In operation 308, the IUE sends the second indication information, and the second indication information is used to indicate a channel access manner and/or a sending manner for sending the first SL PRS.

The second indication information may be at least one of: COT sharing information, SL PRS trigger information, the third transmission resource, or the third channel access manner. That is, the second indication information may be any indication information described in the manner 1, manner 2 and manner 3. A manner in which the RUE sends the first SL PRS according to the indication information may refer to the description in the manner 1, manner 2 and manner 3.

When the second indication information includes COT sharing information, the RUE is allowed to access the channel by using the Type 2 LBT manner and/or to send the first SL PRS by using the COT shared by the IUE in a case that the COT sharing condition is satisfied.

The second indication information includes SL PRS trigger information. When the second indication information includes the first SL PRS trigger information and the second PSCCH carries the COT length, the RUE is allowed to access the channel by using the Type 2 LBT manner and/or to send the first SL PRS by using the COT shared by the IUE. When the second indication information includes the second SL PRS trigger information, and the second PSCCH carries the latest time, the RUE is allowed to access the channel by using the Type 2 LBT manner before the latest time, and/or to send the first SL PRS by using the COT shared by the IUE before the latest time.

The second indication information includes the third transmission resource and the third channel access manner. The RUE is allowed to access the channel by using the third channel access manner and to send the first SL PRS on the third transmission resource. In a case that the third transmission resource is located in the COT shared by the IUE, the third channel access manner may be the Type 2 LBT manner or the Type 1 LBT manner. In a case that the third transmission resource is located outside the COT shared by the IUE, the third channel access manner should be the Type 1 LBT manner.

In operation 309, the RUE accesses the channel and sends the first PSCCH according to the first indication information.

In a case that the first indication information includes COT sharing information, if the RUE satisfies the PSCCH sharing condition, the RUE may access the channel by using the Type 2 LBT manner and/or send the first PSCCH by using the COT shared by the IUE.

In a case that the first indication information includes the first SL PRS trigger information, the RUE may access the channel by using the Type 2 LBT manner and/or send the first PSCCH by using the COT shared by the IUE.

In a case that the first indication information includes the second SL PRS trigger information, the RUE may access the channel by using the Type 2 LBT manner before the latest time, and/or send the first PSCCH before the latest time.

In a case that the first indication information includes the second transmission resource and the second channel access manner, the RUE may access the channel by using the second channel access manner and/or send the first PSCCH on the second transmission resource.

In operation 310, the IUE accesses the channel and sends the first SL PRS according to the second indication information.

In a case that the second indication information includes COT sharing information, if the RUE satisfies the COT sharing condition, the RUE may access the channel by using the Type 2 LBT manner and/or send the first SL PRS by using the COT shared by the IUE.

In a case that the second indication information includes the first SL PRS trigger information, the RUE may access the channel by using the Type 2 LBT manner and/or send the first SL PRS by using the COT shared by the IUE.

In a case that the second indication information includes the second SL PRS trigger information, the RUE may access the channel by using the Type 2 LBT manner before the latest time, and/or send the first SL PRS before the latest time.

In a case that the second indication information includes the third transmission resource and the third channel access manner, the RUE may access the channel by using the third channel access manner and/or send the first SL PRS on the third transmission resource.

In summary, in the method provided by the present embodiment, the IUE respectively sends, to the RUE, the first indication information and the second indication information, to respectively indicate the manners for sending the PSCCH and the SL PRS. A method for sharing the COT with the UE that sends the SL PRS on unlicensed spectrum is provided, thereby improving channel access success rate and transmission efficiency of the SL-U UE, and improving positioning accuracy.

For the sending methods for the PSCCH and the SL PRS, the IUE may indicate, to the RUE by using different manners, the channel access manners and manners for sending the PSCCH and the SL PRS.

Method 1: The sending of the SL PRS and the reserved resource for sending the SL PRS are indicated through the PSCCH. The PSCCH and the SL PRS are sent on the same Orthogonal Frequency Division Multiplexing (OFDM) symbol(s) or adjacent OFDM symbols within the same slot.

Method 2: The sending of the SL PRS and the reserved resource for sending the SL PRS are indicated through the PSCCH and PSSCH. The PSCCH, the PSSCH, and the SL PRS are sent on the same OFDM symbol(s) or adjacent OFDM symbols within the same slot.

Method 3: The sending of the SL PRS and the reserved resource for sending the SL PRS are indicated through the PSCCH. The PSCCH and the SL PRS are sent on non-adjacent OFDM symbols within the same slot, or the PSCCH and the SL PRS are sent within different slots.

Hereinafter, these three sending methods and their indication manners will be described.

**Method 1: The sending of the SL PRS and the reserved resource for sending the SL PRS are indicated through the PSCCH. The PSCCH and the SL PRS are sent on the same OFDM symbol(s) or adjacent OFDM symbols within the same slot.**

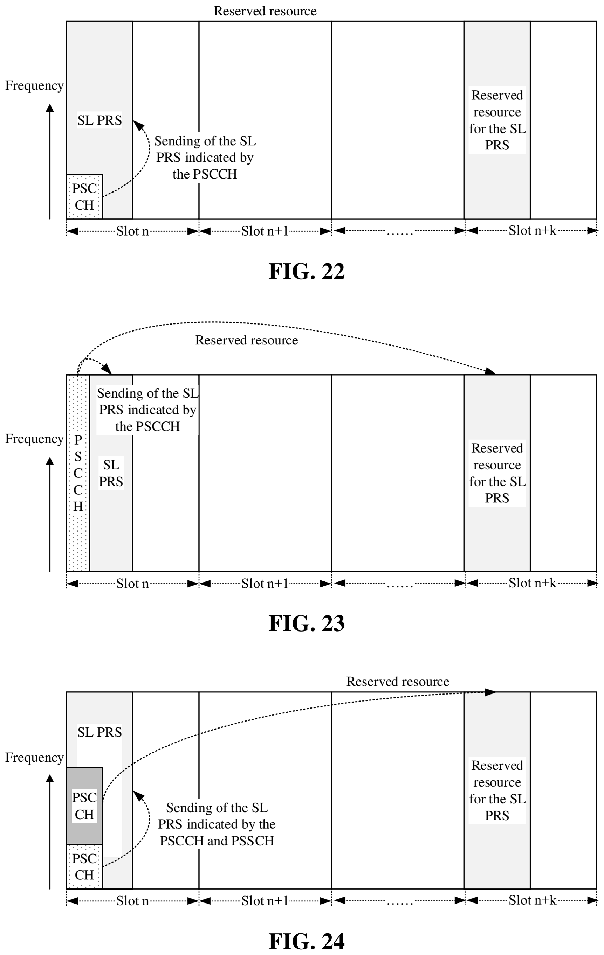

Referring to FIG. 22, the PSCCH and the SL PRS are sent on the same OFDM symbols within the same slot. The same OFDM symbols means that there is overlap between the OFDM symbols on which the PSCCH is sent and the OFDM symbols on which the SL PRS is sent, for example, the PSCCH and the SL PRS are sent simultaneously on some symbols in the slot n.

Alternatively, the first PSCCH and the first SL PRS, and, the second PSCCH and the second SL PRS are sent by using the same method. That is, the first PSCCH and the first SL PRS are sent on the same OFDM symbol(s) within the same slot, and the second PSCCH and the second SL PRS are sent on the same OFDM symbol(s) within the same slot.

Referring to FIG. 23, the PSCCH and the SL PRS are sent on adjacent OFDM symbols within the same slot. For example, the PSCCH is sent on the first group of symbols within slot n, and the SL PRS is sent on the second group of symbols, the first group of symbols is adjacent to the second group of symbols.

Alternatively, the first PSCCH and the first SL PRS, and, the second PSCCH and the second SL PRS are sent by using the same method. That is, the first PSCCH and the first SL PRS are sent on adjacent OFDM symbols within the same slot, and the second PSCCH and the second SL PRS are sent on adjacent OFDM symbols within the same slot.

The terminal (including the IUE and the RUE) sends the PSCCH to indicate that the SL PRS is sent in the same slot, and simultaneously, the resource for sending the SL PRS in the subsequent slot may be reserved by the sent PSCCH. As illustrated in FIG. 22, the PSCCH and the indicated SL PRS may be sent on the same OFDM symbols, or as illustrated in FIG. 23, the PSCCH and the indicated SL PRS may be sent on adjacent OFDM symbols.

In a case that the PSCCH and the SL PRS are sent on the same symbol(s) within the same slot, the bandwidth occupied by the PSCCH is configured by the network or pre-configured. For example, the bandwidth occupied by the PSCCH for indicating the sending of the SL PRS and the resource reservation for the SL PRS in the SL PRS resource pool is indicated in the configuration or pre-configuration signaling of the SL PRS resource pool (resources for sending the SL PRS). The bandwidth occupied by the PSCCH may be less than the bandwidth occupied by the SL PRS indicated by the PSCCH. The number of OFDM symbols occupied by the PSCCH may be configured by the network or pre-configured, or the PSCCH may fixedly occupy one OFDM symbol.

For example, the SL PRS resource pool includes multiple subchannels in the frequency domain configuration or pre-configuration, one subchannel includes one or more Physical Resource Blocks (PRBs), or one subchannel includes one or more IRBs. The bandwidth occupied by the PSCCH is one subchannel. The SL PRS may occupy one or more subchannels, and the occupied subchannel(s) is indicated by the PSCCH. Alternatively, the bandwidth of the SL PRS is fixed to the bandwidth of the SL PRS resource pool.

Alternatively, a minimum bandwidth occupied by the SL PRS is indicated in the configuration information of the SL PRS resource pool or pre-configuration information, and the minimum bandwidth may be a bandwidth occupied by the entire SL PRS resource pool. The bandwidth occupied by the PSCCH is further indicated in the pre-configuration information or the configuration information of the SL PRS resource pool, and the bandwidth of the PSCCH is less than or equal to the bandwidth of the SL PRS.

In a case that the bandwidth occupied by the PSCCH is less than the bandwidth occupied by the SL PRS, the starting position of the frequency domain resources occupied by the PSCCH is the starting point of the bandwidth occupied by the SL PRS.

In a case that the PSCCH and the SL PRS are sent on adjacent symbols within the same slot, the bandwidth occupied by the SL PRS sent by the resource pool is indicated in the pre-configuration information or the configuration information of the resource pool. The bandwidth occupied by the SL PRS may be the bandwidth of the entire resource pool, and the bandwidth occupied by the PSCCH and the bandwidth occupied by the SL PRS are the same. The number of OFDM symbols occupied by the PSCCH may be configured by the network or pre-configured, or the PSCCH may fixedly occupy one OFDM symbol.

That is, the bandwidth occupied by the first PSCCH is indicated by the network configuration or pre-configuration or by the second PSCCH. The bandwidth occupied by the first PSCCH is one or more subchannels in the resource pool, or the bandwidth occupied by the first PSCCH is indicated by or the pre-configuration information or the configuration information of the resource pool, and the bandwidth occupied by the first PSCCH is less than or equal to the bandwidth occupied by the first SL PRS. The first PSCCH may occupy one or more subchannels in the SL PRS resource pool, or the first PSCCH may occupy a part of the bandwidth in the SL PRS resource pool.

The number of OFDM symbols occupied by the first PSCCH is configured by the network or pre-configured, or the first PSCCH occupies one OFDM symbol.

The bandwidth occupied by the second PSCCH is configured by the network or pre-configured. The bandwidth occupied by the second PSCCH is one or more subchannels in the resource pool, or the bandwidth occupied by the second PSCCH is indicated by configuration information of the resource pool or pre-configuration information, and the bandwidth occupied by the second PSCCH is less than or equal to the bandwidth occupied by the second SL PRS. The second PSCCH may occupy one or more subchannels in the SL PRS resource pool, or the second PSCCH may occupy a part of the bandwidth in the SL PRS resource pool.

The number of OFDM symbols occupied by the second PSCCH is configured by the network or pre-configured, or the second PSCCH occupies one OFDM symbol.

In the present embodiment, since the PSCCH and the SL PRS may be sent simultaneously or on adjacent OFDM symbols, the RUE may send the first PSCCH and the first SL PRS by using the COT shared by the IUE according to the same COT sharing rule. When the RUE sends the PSCCH and the SL PRS by using the COT shared by the IUE, the channel may be accessed by using the Type 2 LBT.

That is, the IUE may send indication information to the RUE by using any indication manner in the above described manner 1, manner 2, and manner 3, and the RUE may access the channel and send the first PSCCH and the first SL PRS, according to the indication information.

In summary, in the method provided by the present embodiment, in the case that the SL PRS and the PSCCH are sent on the same OFDM symbol(s) or adjacent OFDM symbols within the same slot, the IUE may send COT sharing information to the RUE, so that the RUE can send the PSCCH and the SL PRS within the COT shared by the IUE. The IUE may also send the SL PRS trigger information to the RUE to trigger the RUE to send the SL PRS, the RUE may send the PSCCH and the SL PRS within the COT shared by the IUE, or the RUE may access the channel by using the Type 2 LBT manner and send the PSCCH and SL PRS before the latest time. The IUE may also send the transmission resource and the channel access manner to the RUE, to instruct the RUE to access the channel according to the specified channel access manner, and to send the PSCCH and the SL PRS on the specified transmission resource. A method for sharing the COT with the UE that sends the SL PRS on unlicensed spectrum is provided, thereby improving channel access success rate and transmission efficiency of the SL-U UE, and improving positioning accuracy.

**Method 2: The sending of the SL PRS and the reserved resource for sending the SL PRS are indicated through the PSCCH and PSSCH. The PSCCH, the PSSCH, and the SL PRS are sent on the same OFDM symbol(s) or adjacent OFDM symbols within the same slot.**

Referring to FIG. 24, the PSCCH, the PSSCH, and the SL PRS are sent on the same OFDM symbols within the same slot. The same OFDM symbols means that there is overlap among the OFDM symbols on which the PSCCH is sent, the OFDM symbols on which the SL PRS is sent, and the OFDM symbols on which the PSSCH is sent, for example, the PSCCH, the PSSCH, and the SL PRS are sent simultaneously on some symbols in the slot n.

The IUE sends the second PSCCH, the second PSSCH, and the second SL PRS. The second PSSCH is used to carry the first-order SCI, and the second PSSCH is used to carry the second-order SCI, and the indication information is carried in the SCI (the first-order SCI and the second-order SCI). The RUE accesses the channel and sends the first PSCCH, the first PSSCH, and the first SL PRS, according to the indication information. The first PSCCH and the first PSSCH are used to indicate the sending of the first SL PRS, and to indicate the reserved resource for sending the SL PRS.

Alternatively, the first PSCCH, the first PSSCH, and the first SL PRS, and, the second PSCCH, the second PSSCH, and the second SL PRS are sent by using the same method. That is, the first PSCCH, the first PSSCH, and the first SL PRS are sent on the same OFDM symbol(s) within the same slot, and the second PSCCH, the second PSSCH, and the second SL PRS are sent on the same OFDM symbol(s) within the same slot.

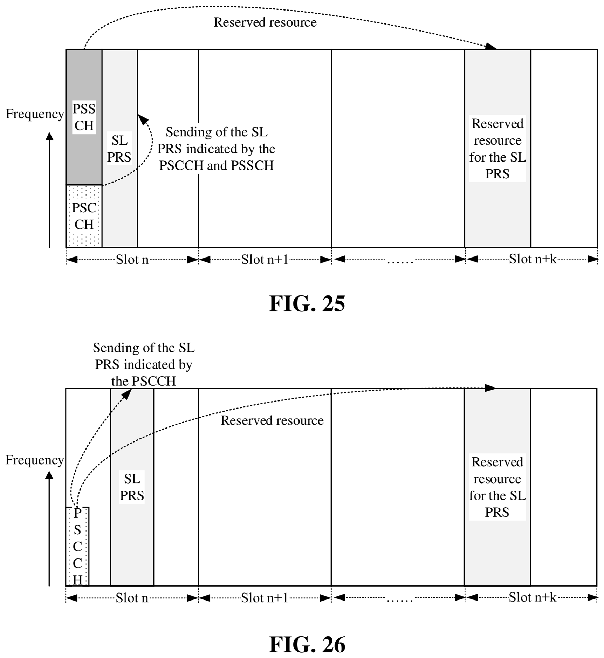

Referring to FIG. 25, the PSCCH, the PSSCH, and the SL PRS are sent on adjacent OFDM symbols within the same slot. For example, the PSCCH and the PSSCH are sent on the first group of symbols within slot n, and the SL PRS is sent on the second group of symbols within slot n, and the first group of symbols is adjacent to the second group of symbols.

The IUE sends the second PSCCH, the second PSSCH, and the second SL PRS. The second PSSCH is used to carry the first-order SCI, and the second PSSCH is used to carry the second-order SCI, and the indication information is carried in the SCI (the first-order SCI and the second-order SCI). The RUE accesses the channel and sends the first PSCCH, the first PSSCH, and the first SL PRS according to the indication information. The first PSCCH and the first PSSCH are used to indicate the sending of the first SL PRS, and to indicate the reserved resource for sending the SL PRS.

Alternatively, the first PSCCH, the first PSSCH, and the first SL PRS, and, the second PSCCH, the second PSSCH, and the second SL PRS are sent by using the same method. That is, the first PSCCH, the first PSSCH, and the first SL PRS are sent on adjacent OFDM symbols within the same slot, and the second PSCCH, the second PSSCH, and the second SL PRS are sent on adjacent OFDM symbols within the same slot.

The UE (including the IUE and the RUE) sends the PSCCH and the PSSCH to indicate that the SL PRS is sent in the same slot, and simultaneously, the resource for sending the SL PRS in the subsequent slot may be reserved by the sent PSCCH and PSSCH. As illustrated in FIG. 24, the PSCCH, the PSSCH, and the indicated SL PRS may be sent in the same OFDM symbol(s), or as illustrated in FIG. 26, the PSCCH, the PSSCH, and the indicated SL PRS may be sent in adjacent OFDM symbols,.

In a case that the PSCCH, the PSSCH and the SL PRS are sent on the same symbol(s) within the same slot, the bandwidth occupied by the PSCCH for indicating the sending of the SL PRS and the resource reservation for the SL PRS in the SL PRS resource pool is explicitly indicated in the configuration or pre-configuration signaling for the SL PRS resource pool for sending the SL PRS. The bandwidth occupied by the PSCCH may be less than the bandwidth occupied by the SL PRS indicated by the PSCCH. The bandwidth of the PSSCH may be configured by the network, pre-configured, or indicated by the PSCCH, the PSCCH and the PSSCH occupy adjacent frequency domain resources, and the total bandwidth occupied by the PSCCH and the PSSCH may be less than the bandwidth occupied by the SL PRS indicated by the PSCCH and the PSSCH. The number of OFDM symbols occupied by the PSCCH and the PSSCH may be configured by the network or pre-configured, or the PSCCH may fixedly occupy one OFDM symbol.

In a case that the PSCCH, the PSSCH and the SL PRS are sent on the adjacent symbols within the same slot, the bandwidth occupied by the sent SL PRS in the SL PRS resource pool is indicated in the configuration information of the SL PRS resource pool or pre-configuration information. The bandwidth occupied by the SL PRS may be the bandwidth of the entire SL PRS resource pool, and the total bandwidth occupied by the PSCCH and the PSSCH may be the same as the bandwidth occupied by the SL PRS. The bandwidth occupied by the PSCCH is configured by the network or pre-configured, and the remaining frequency domain resources are used for the PSSCH. The PSCCH and the PSSCH occupy adjacent frequency domain resources. The number of OFDM symbols occupied by the PSCCH and the PSSCH may be configured by the network or pre-configured, or the PSCCH may fixedly occupy one OFDM symbol.

That is, the bandwidth occupied by the first PSCCH and the first PSSCH are indicated by the network configuration or pre-configuration or by the second PSCCH. The bandwidth occupied by the first PSCCH and the first PSSCH is one or more subchannels in the resource pool. The total bandwidth occupied by the first PSCCH and the first PSSCH is less than or equal to the bandwidth occupied by the first SL PRS. The first PSCCH and the first PSSCH may occupy one or more subchannels in the SL PRS resource pool, or the first PSCCH and the first PSSCH may occupy a part or all of the bandwidth in the SL PRS resource pool. Alternatively, the frequency domain resource occupied by the first PSSCH is an unused frequency domain resource among the frequency domain resources occupied by the first PSCCH.

The number of OFDM symbols occupied by the second PSCCH and the second PSSCH is configured by the network or pre-configured. Alternatively, the second PSCCH occupies one OFDM symbol.

The bandwidth occupied by the second PSCCH and the second PSSCH are configured by the network or pre-configured. The bandwidth occupied by the second PSCCH and the second PSSCH is one or more subchannels in the resource pool. The total bandwidth occupied by the second PSCCH and the second PSSCH is less than or equal to the bandwidth occupied by the second SL PRS. The second PSCCH and the second PSSCH may occupy one or more subchannels in the SL PRS resource pool, or the second PSCCH and the second PSSCH may occupy a part or all of the bandwidth in the SL PRS resource pool. Alternatively, the frequency domain resource occupied by the second PSSCH is an unused frequency domain resource among the frequency domain resources occupied by the second PSCCH.

The number of OFDM symbols occupied by the second PSCCH and the second PSSCH is configured by the network or pre-configured. Alternatively, the second PSCCH occupies one OFDM symbol.

In the present embodiment, since the PSCCH, the PSSCH, and the SL PRS may be sent simultaneously or on adjacent OFDM symbols, the RUE may send the PSCCH, the PSSCH, and the SL PRS by using the COT shared by the IUE according to the same rule. When the RUE sends the PSCCH, the PSSCH, and the SL PRS by using the COT shared by the IUE, the channel may be accessed by using the Type 2 LBT.

That is, the IUE may send indication information to the RUE by using any one indication manner in the above described manner 1, manner 2, and manner 3, and the RUE may access the channel and send the first PSCCH, the first PSSCH, and the first SL PRS according to the indication information.

In summary, in the method provided by the present embodiment, in the case that the SL PRS and the PSCCH are sent on the same OFDM symbol(s) or adjacent OFDM symbols within the same slot, the IUE may send COT sharing information to the RUE, so that the RUE can send the PSCCH, the PSSCH, and the SL PRS within the COT shared by the IUE. The IUE may send the SL PRS trigger information to the RUE to trigger the RUE to send the SL PRS, the RUE may send the PSCCH, the PSSCH, and the SL PRS within the COT shared by the IUE, or the RUE may access the channel by using the Type 2 LBT manner and send the PSCCH, the PSSCH, and the SL PRS before the latest time. The IUE may also send the transmission resource and the channel access manner to the RUE, to instruct the RUE to access the channel according to the specified channel access manner, and to send the PSCCH, the PSSCH, and the SL PRS on the specified transmission resource. A method for sharing the COT with the UE that sends the SL PRS on unlicensed spectrum is provided, thereby improving channel access success rate and transmission efficiency of the SL-U UE, and improving positioning accuracy.

**Method 3: The sending of the SL PRS and the reserved resource for sending the SL PRS are indicated through the PSCCH. The PSCCH and the SL PRS are sent on non-adjacent OFDM symbols within the same slot, or the PSCCH and the SL PRS are sent within different slots.**

Referring to FIG. 26, the PSCCH and the SL PRS are sent on non-adjacent OFDM symbols within the same slot, for example, the PSCCH is sent in the first group of symbols in slot n, and the SL PRS is sent in the second group of symbols in slot n, and the first group of symbols and the second group of symbols are not adjacent.

Alternatively, the first PSCCH and the first SL PRS, and, the second PSCCH and the second SL PRS are sent by using the same method. That is, the first PSCCH and the first SL PRS are sent on non-adjacent OFDM symbols within the same slot, and the second PSCCH and the second SL PRS are sent on non-adjacent OFDM symbols within the same slot.

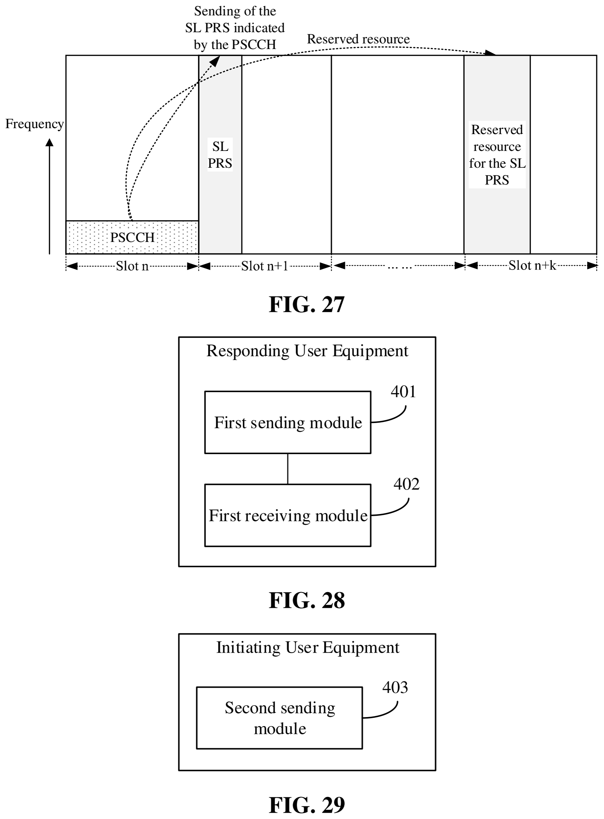

Referring to FIG. 27, the PSSCH and the SL PRS are sent in different slots. For example, the PSCCH is sent within slot n, and the SL PRS indicated by the PSCCH is sent within slot n+1.

Alternatively, the first PSCCH and the first SL PRS, and, the second PSCCH and the second SL PRS are sent by using the same method. That is, the first PSCCH and the first SL PRS are sent in different slots, and the second PSCCH and the second SL PRS are sent in different slots.

The terminal (including the IUE and the RUE) sends at least the PSCCH to indicate the sending of the SL PRS, and simultaneously, the resource for sending the SL PRS in the subsequent slot may be reserved by the sent PSCCH. As illustrated in FIG. 26, the PSCCH and the indicated SL PRS may be sent on non-adjacent OFDM symbols, or as illustrated in FIG. 27, the PSCCH and the indicated SL PRS may be sent in different slots.

The bandwidth occupied by the PSCCH is configured by the network or pre-configured. For example, the bandwidth occupied by the PSCCH for indicating the sending of the SL PRS and the resource reservation for the SL PRS in the SL PRS resource pool is indicated in the configuration or pre-configuration signaling for the SL PRS resource pool (resources for sending the SL PRS). The bandwidth occupied by the PSCCH may be less than the bandwidth occupied by the SL PRS indicated by the PSCCH. The number of OFDM symbols occupied by the PSCCH may be configured by the network or pre-configured, or the PSCCH may fixedly occupy one OFDM symbol.

For example, the SL PRS resource pool includes multiple subchannels in the frequency domain configuration or pre-configuration, one subchannel includes one or more PRBs, or one subchannel includes one or more IRBs. The bandwidth occupied by the PSCCH is one subchannel. The SL PRS may occupy one or more subchannels, and the occupied subchannel(s) is indicated by the PSCCH. Alternatively, the bandwidth of the SL PRS is fixed to the bandwidth of the SL PRS resource pool.

Alternatively, a minimum bandwidth occupied by the SL PRS is indicated in the pre-configuration information or the configuration information of the SL PRS resource pool, and the minimum bandwidth may be a bandwidth occupied by the entire SL PRS resource pool. The bandwidth occupied by the PSCCH is further indicated in the pre-configuration information or the configuration information of the SL PRS resource pool, and the bandwidth of the PSCCH is less than or equal to the bandwidth of the SL PRS.

Alternatively, the bandwidth occupied by the sent SL PRS in the resource pool is indicated in the pre-configuration information or the configuration information of the resource pool. The bandwidth occupied by the SL PRS may be the bandwidth of the entire resource pool, and the bandwidth occupied by the PSCCH and the bandwidth occupied by the SL PRS are the same. The number of OFDM symbols occupied by the PSCCH may be configured by the network or pre-configured, or the PSCCH may fixedly occupy one OFDM symbol.

That is, the bandwidth occupied by the first PSCCH is indicated by the network configuration or pre-configuration or by the second PSCCH. The bandwidth occupied by the first PSCCH is one or more subchannels in the resource pool, or the bandwidth occupied by the first PSCCH is indicated by the pre-configuration information or the configuration information of the resource pool, and the bandwidth occupied by the first PSCCH is less than or equal to the bandwidth occupied by the first SL PRS. The first PSCCH may occupy one or more subchannels in the SL PRS resource pool, or the first PSCCH may occupy a part of the bandwidth in the SL PRS resource pool.

The number of OFDM symbols occupied by the first PSCCH is configured by the network or pre-configured, or the first PSCCH occupies one OFDM symbol.

The bandwidth occupied by the second PSCCH is configured by the network or pre-configured. The bandwidth occupied by the second PSCCH is one or more subchannels in the resource pool, or the bandwidth occupied by the second PSCCH is indicated by pre-configuration information or configuration information of the resource pool, and the bandwidth occupied by the second PSCCH is less than or equal to the bandwidth occupied by the second SL PRS. The second PSCCH may occupy one or more subchannels in the SL PRS resource pool, or the second PSCCH may occupy a part of the bandwidth in the SL PRS resource pool.

The number of OFDM symbols occupied by the second PSCCH is configured by the network or pre-configured, or the second PSCCH occupies one OFDM symbol.

In the present embodiment, since the PSCCH and the SL PRS are sent at different times, the RUE may comply with different COT sharing rules when sending the PSCCH and the SL PRS.

For example, the IUE may send the second indication information to the RUE by using any one indication manner in the above described manner 1, manner 2, and manner 3, to indicate the sending of the first SL PRS, and the RUE may access the channel and send the first SL PRS according to the second indication information. The second indication information may be indication information in the manner 1, manner 2, and manner 3.

For another example, the IUE may send the first indication information to the RUE by using any one indication manner in the above described manner 1, manner 2, manner 3 and manner 4, to indicate the sending of the first PSCCH, and the RUE may access the channel and send the first PSCCH according to the first indication information. The first indication information may be indication information in the manner 1, manner 2, and manner 3, or the first indication information may be indication information in the manner 4.

In summary, in the method provided by the present embodiment, the UE may indicate the sending of the SL PRS and reserved resource for sending the SL PRS only through the PSCCH and/or the PSSCH. For the case that the SL PRS and the PSCCH are sent in non-adjacent OFDM symbols within the same slot or the SL PRS and the PSCCH are sent in different slots, the IUE may send the first indication information to the RUE to indicate the manner for the RUE to access the channel and send the first PSCCH. The IUE may further send the second indication information to the RUE to indicate the manner for the RUE to access the channel and send the first SL PRS. A method for sharing the COT with the UE that sends the SL PRS on unlicensed spectrum is provided, thereby improving channel access success rate and transmission efficiency of the SL-U UE, and improving positioning accuracy.

It should be noted that the operations in the method in the above embodiments may be arbitrarily combined to obtain new embodiments, which is not limited in the present disclosure.

FIG. 28 is a structural block diagram of an apparatus for sending a SL PRS according to an exemplary embodiment of the present disclosure. The apparatus may be implemented as a RUE, or may be implemented as a part of the RUE. The apparatus includes the first sending module 401.

The first sending module 401 is configured to access a channel and send the first PSCCH and the first SL PRS, according to indication information from an IUE.

In an alternative embodiment, the indication information includes at least COT sharing information.

In a case that the RUE satisfies a COT sharing condition, the RUE is allowed to send the first PSCCH and the first SL PRS within a COT shared by the IUE.

In an alternative embodiment, the COT sharing condition includes at least one of: the RUE is a receiving UE of SL sending within the COT from the IUE; the IUE is a receiving UE of the first SL PRS sent by the RUE; or a CAPC value corresponding to the first SL PRS sent by the RUE is less than or equal to a CAPC value indicated in the COT sharing information sent by the IUE.

In an alternative embodiment, the apparatus further includes the first receiving module 402.

The first receiving module 402 is configured to receive the COT sharing information sent by the IUE. The COT sharing information includes a COT length and a CAPC value.

In an alternative embodiment, the first receiving module 402 is configured to receive the second PSCCH sent by the IUE. The second PSCCH carries SCI, and the COT sharing information is indicated by at least one bit field in the SCI.

The CAPC value is indirectly indicated by a priority field in the SCI.

A length of a bit field for indicating the COT length is $A+2^{\mu} - 1$. A is a positive integer determined according to a network configuration or a pre-configuration, and $\mu$ is a subcarrier spacing index of a current carrier.

In an alternative embodiment, the indication information includes the first SL PRS trigger information sent by the IUE to the RUE.

The RUE is allowed to send the first PSCCH and the first SL PRS within a COT shared by the IUE.

In an alternative embodiment, the first SL PRS trigger information includes the second PSCCH and/or the second SL PRS sent by the IUE, and SCI in the second PSCCH includes a bit field for indicating a COT length.

In an alternative embodiment, the indication information includes the second SL PRS trigger information sent by the IUE to the RUE.

The RUE is allowed to access the channel by using a Type 2 LBT manner and send the first PSCCH and the first SL PRS, before a latest time. The latest time is indicated by the IUE.

In an alternative embodiment, the second SL PRS trigger information includes the second PSCCH and/or the second SL PRS sent by the IUE, and SCI in the second PSCCH includes a bit field for indicating the latest time.

In an alternative embodiment, the indication information includes indication information, for the first transmission resource and the first channel access manner, sent by the IUE to the RUE.

The first sending module 401 is configured to access the channel according to the first channel access manner, and send the first PSCCH and the first SL PRS on the first transmission resource.

In an alternative embodiment, the first channel access manner includes a Type 2 LBT manner, and/or the first channel access manner includes a Type 1 LBT manner.

In an optional embodiment, the first transmission resource includes a reserved transmission resource indicated by the IUE through the second PSCCH, and the first channel access manner is indicated in the second PSCCH.

In an alternative embodiment, the first PSCCH and the first SL PRS are sent on the same OFDM symbol(s) within a same slot; or the first PSCCH and the first SL PRS are sent on adjacent OFDM symbols within a same slot.

In an alternative embodiment, a bandwidth occupied by the first PSCCH is configured by a network or pre-configured.

The number of OFDM symbols occupied by the first PSCCH is configured by the network or pre-configured, or the first PSCCH occupies one OFDM symbol.

In an alternative embodiment, the bandwidth occupied by the first PSCCH is a subchannel in a resource pool, or the bandwidth occupied by the first PSCCH is indicated by pre-configuration information or configuration information of the resource pool, and the bandwidth occupied by the first PSCCH is less than or equal to a bandwidth occupied by the first SL PRS.

In an alternative embodiment, the first sending module 401 is configured to send the first PSCCH, the first PSSCH, and the first SL PRS.

The first PSCCH and the first PSSCH are used to indicate a sending of the first SL PRS and to indicate a reserved resource for sending the SL PRS.

In an alternative embodiment, the first PSCCH, the first PSSCH, and the first SL PRS are sent on same OFDM symbol(s) within a same slot; or the first PSCCH and the first PSSCH are sent on same OFDM symbol(s) within a same slot, and the first PSSCH and the first SL PRS are sent on adjacent OFDM symbols within a same slot.

In an alternative embodiment, a bandwidth occupied by the first PSCCH and the first PSSCH is configured by a network or pre-configured, or the bandwidth occupied by the first PSSCH is indicated by the second PSCCH sent by the IUE.

The number of OFDM symbols occupied by the first PSCCH and the first PSSCH is configured by a network or pre-configured, or the first PSCCH occupies one OFDM symbol.

In an alternative embodiment, the first PSCCH and the first SL PRS are sent on non-adjacent OFDM symbols within a same slot, or the first PSSCH and the first SL PRS are sent within different slots.

In an optional embodiment, the first sending module 401 is configured to access the channel and send the first PSCCH, according to the first indication information from the IUE.

The first sending module 401 is configured to access the channel and send the first SL PRS, according to the second indication information from the IUE.

In an alternative embodiment, the second indication information includes at least COT sharing information.

In a case that the RUE satisfies a COT sharing condition, the RUE is allowed to send the first SL PRS within a COT shared by the IUE.

The COT sharing condition includes at least one of: the RUE is a receiving UE of SL sending within the COT from the IUE; the IUE is a receiving UE of the first SL PRS sent by the RUE; or a CAPC value corresponding to the first SL PRS sent by the RUE is less than or equal to a CAPC value indicated in the COT sharing information sent by the IUE.

In an alternative embodiment, the second indication information includes the first SL PRS trigger information sent by the IUE to the RUE.

The RUE is allowed to send the first SL PRS within a COT indicated by the first SL PRS trigger information. The

EP 4 654 683 A1

first trigger information includes the second PSCCH and/or the second SL PRS sent by the IUE, the second PSCCH carries a COT length.

In an alternative embodiment, the second indication information includes the second SL PRS trigger information sent by the IUE to the RUE.

The RUE is allowed to send the first SL PRS before a latest time indicated by the second SL PRS trigger information.

In an alternative embodiment, the second indication information includes indication information, for the first transmission resource and the first channel access manner, sent by the IUE to the RUE.

The first sending module 401 is configured to access the channel according to the first channel access manner, and send the first SL PRS on the first transmission resource.

In an alternative embodiment, the first indication information includes at least one of: COT sharing information, SL PRS trigger information, the second transmission resource, or a second channel access manner.

In a case that a PSCCH sharing condition is satisfied, the RUE is allowed to access the channel and send the first PSCCH according to the second indication information.

The PSCCH sharing condition includes at least one of: a CAPC value indicated in the first PSCCH sent by the RUE is less than or equal to a CAPA value indicated in the COT sharing information sent by the IUE; resource reservation information indicated in the first PSCCH sent by the RUE is information received by the IUE; the RUE is a receiving UE of SL sending within the COT from the IUE; the IUE is a receiving UE of the first SL PRS sent by the RUE; a CAPC value corresponding to the first SL PRS sent by the RUE is less than or equal to the CAPC value indicated in the COT sharing information sent by the IUE; the first SL PRS trigger information sent by the IUE is received by the RUE; the second SL PRS trigger information sent by the IUE is received by the RUE; or indication information, for the second transmission resource and the second channel access manner, sent by the IUE is received by the RUE. The first SL PRS trigger information includes the second PSCCH and/or the second SL PRS sent by the IUE, and SCI in the second PSCCH includes a bit field for indicating a COT length. The second SL PRS trigger information includes the second PSCCH and/or the second SL PRS sent by the IUE, the second SL PRS trigger information is used to indicate a latest time at which the RUE is allowed to access the channel by using a Type 2 LBT manner, and the SCI in the second PSCCH includes a bit field used to indicate the latest time.

FIG. 29 illustrated a structural block diagram of an apparatus for sending a SL PRS according to an exemplary embodiment of the present disclosure. The apparatus may be implemented as an IUE, or may be implemented as a part of the IUE. The apparatus includes the second sending module 403.

The second sending module 403 is configured to send indication information. The indication information is used for indicating, to a RUE, sending manners of the first PSCCH and the first SL PRS.

In an alternative embodiment, the indication information includes at least COT sharing information.

In a case that the RUE satisfies a COT sharing condition, the RUE is allowed to send the first PSCCH and the first SL PRS within a COT shared by the IUE.

In an alternative embodiment, the COT sharing condition includes at least one of: the RUE is a receiving UE of SL sending within the COT from the IUE; the IUE is a receiving UE of the first SL PRS sent by the RUE; or a CAPC value corresponding to the first SL PRS sent by the RUE is less than or equal to a CAPC value indicated in the COT sharing information sent by the IUE.

In an alternative embodiment, the second sending module 403 is configured to send the COT sharing information to the RUE. The COT sharing information includes a COT length and a CAPC value.

In an alternative embodiment, the second sending module 403 is configured to send the second PSCCH to the RUE. The second PSCCH carries SCI, and the COT sharing information is indicated by at least one bit field in the SCI.

The CAPC value is indirectly indicated by a priority field in the SCI.

A length of a bit field for indicating the COT length is A+2$^\mu$ - 1. A is a positive integer determined according to a network configuration or a pre-configuration, and $\mu$ is a subcarrier spacing index of a current carrier.

In an alternative embodiment, the indication information includes the first SL PRS trigger information sent by the IUE to the RUE.

The RUE is allowed to send the first PSCCH and the first SL PRS within a COT shared by the IUE.

In an alternative embodiment, the first SL PRS trigger information includes the second PSCCH and/or the second SL PRS sent by the IUE, and SCI in the second PSCCH includes a bit field for indicating a COT length.

In an alternative embodiment, the indication information includes the second SL PRS trigger information sent by the IUE to the RUE.

The RUE is allowed to access the channel by using a Type 2 LBT manner and send the first PSCCH and the first SL PRS before a latest time. The latest time is indicated by the IUE.

In an alternative embodiment, the second SL PRS trigger information includes the second PSCCH and/or the second SL PRS sent by the IUE, and SCI in the second PSCCH includes a bit field for indicating the latest time.

In an alternative embodiment, the indication information includes indication information, for the first transmission

24

resource and the first channel access manner, sent by the IUE to the RUE.

The RUE is allowed to access the channel according to the first channel access manner, and send the first PSCCH and the first SL PRS on the first transmission resource.

In an alternative embodiment, the first channel access manner includes a Type 2 LBT manner, and/or the first channel access manner includes a Type 1 LBT manner.

In an alternative embodiment, the first transmission resource includes a reserved transmission resource indicated by the IUE through the second PSCCH, and the first channel access manner is indicated in the second PSCCH.

In an alternative embodiment, the first PSCCH and the first SL PRS are sent on same OFDM symbol(s) within a same slot, or the first PSCCH and the first SL PRS are sent on adjacent OFDM symbols within a same slot.

In an alternative embodiment, a bandwidth occupied by the first PSCCH is configured by a network or pre-configured.

The number of OFDM symbols occupied by the first PSCCH is configured by the network or pre-configured, or the first PSCCH occupies one OFDM symbol.

In an alternative embodiment, the bandwidth occupied by the first PSCCH is a subchannel in a resource pool, or the bandwidth occupied by the first PSCCH is indicated by pre-configuration information or configuration information of the resource pool, and the bandwidth occupied by the first PSCCH is less than or equal to a bandwidth occupied by the first SL PRS.

In an alternative embodiment, the indication information is used for indicating, to the RUE, sending manners of the first PSCCH, the first PSSCH, and the first SL PRS.

The first PSCCH and the first PSSCH are used to indicate a sending of the first SL PRS and to indicate a reserved resource for sending the SL PRS.

In an alternative embodiment, the first PSCCH, the first PSSCH, and the first SL PRS are sent on same OFDM symbol(s) within a same slot, or the first PSCCH and the first PSSCH are sent on same OFDM symbol(s) within a same slot, and the first PSSCH and the first SL PRS are sent on adjacent OFDM symbols within a same slot.

In an alternative embodiment, a bandwidth occupied by the first PSCCH and the first PSSCH is configured by a network or pre-configured, or the bandwidth occupied by the first PSSCH is indicated by the second PSCCH sent by the IUE.

The number of OFDM symbols occupied by the first PSCCH and the first PSSCH is configured by a network or pre-configured, or the first PSCCH occupies one OFDM symbol.

In an alternative embodiment, the first PSCCH and the first SL PRS are sent on non-adjacent OFDM symbols within a same slot; or the first PSSCH and the first SL PRS are sent within different slots.

In an alternative embodiment, the operation of sending the indication information includes the following operations.

The first indication information is sent. The first indication information is used for indicating, to the RUE, a sending manner of the first PSCCH.

The second indication information is sent. The second indication information is used for indicating, to the RUE, a sending manner of the first SL PRS.

In an alternative embodiment, the second indication information includes at least COT sharing information.

In a case that the RUE satisfies a COT sharing condition, the RUE is allowed to send the first SL PRS within a COT shared by the IUE.

The COT sharing condition includes at least one of: the RUE is a receiving UE of SL sending within the COT from the IUE; the IUE is a receiving UE of the first SL PRS sent by the RUE; or a CAPC value corresponding to the first SL PRS sent by the RUE is less than or equal to a CAPC value indicated in the COT sharing information sent by the IUE.

In an alternative embodiment, the second indication information includes the first SL PRS trigger information sent by the IUE to the RUE.

The RUE is allowed to send the first SL PRS within a COT indicated by the first SL PRS trigger information. The first trigger information includes the second PSCCH and/or the second SL PRS sent by the IUE, and the second PSCCH carries a COT length.

In an alternative embodiment, the second indication information includes the second SL PRS trigger information sent by the IUE to the RUE.

The RUE is allowed to send the first SL PRS before a latest time indicated by the second SL PRS trigger information.

In an alternative embodiment, the second indication information includes indication information, for the first transmission resource and the first channel access manner, sent by the IUE to the RUE.

The RUE is allowed to access the channel by using the first channel access manner and send the first SL PRS on the first transmission resource.

In an alternative embodiment, the first indication information includes at least one of: COT sharing information, SL PRS trigger information, the second transmission resource, or the second channel access manner.

In a case that a PSCCH sharing condition is satisfied, the RUE is allowed to access the channel and send the first PSCCH according to the second indication information.

The PSCCH sharing condition includes at least one of: a CAPC value indicated in the first PSCCH sent by the RUE is less than or equal to a CAPA value indicated in the COT sharing information sent by the IUE; resource reservation information indicated in the first PSCCH sent by the RUE is information received by the IUE; the RUE is a receiving UE of SL sending within the COT from the IUE; the IUE is a receiving UE of the first SL PRS sent by the RUE; a CAPC value corresponding to the first SL PRS sent by the RUE is less than or equal to the CAPC value indicated in the COT sharing information sent by the IUE; the first SL PRS trigger information sent by the IUE is received by the RUE; the second SL PRS trigger information sent by the IUE is received by the RUE; or indication information, for the second transmission resource and the second channel access manner, sent by the IUE, is received by the RUE. The first SL PRS trigger information includes the second PSCCH and/or the second SL PRS sent by the IUE, and SCI in the second PSCCH includes a bit field for indicating a COT length. The second SL PRS trigger information includes the second PSCCH and/or the second SL PRS sent by the IUE, the second SL PRS trigger information is used to indicate a latest time at which the RUE is allowed to access the channel by using a Type 2 LBT manner, and the SCI in the second PSCCH includes a bit field used to indicate the latest time.

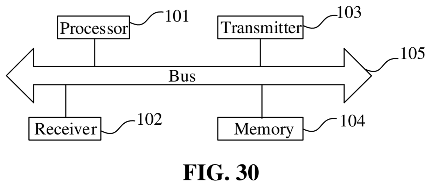

FIG. 30 illustrates a schematic structural diagram of a communication device (UE or a network device) according to an exemplary embodiment of the present disclosure. The communication device includes a processor 101, a receiver 102, a transmitter 103, a memory 104, and a bus 105.

The processor 101 includes one or more processing cores. The processor executes various functional applications and information processing by running software programs and modules.

The receiver 102 and the transmitter 103 may be implemented as a communication component. The communication component may be a communication chip, and the communication component may be referred to as a transceiver.

The memory 104 is connected to the processor 101 via a bus 105.

The memory 104 may be configured to store at least one instruction. The processor 101 is configured to execute the at least one instruction to implement various operations in the above method embodiments.

Further, the memory 104 may be implemented by any type of volatile or non-volatile storage device or the combination of them. The volatile or non-volatile storage device includes, but is not limited to, magnetic or optical disks, Electrically-Erasable Programmable Read Only Memory (EEPROM), Erasable Programmable Read Only Memory (EPROM), Static Random Access Memory (SRAM), Read-Only Memory (ROM), Magnetic Memory, Flash Memory, Programmable Read-Only Memory (PROM).

Here, when the communication device is implemented as a UE, the processor and the transceiver in the communication device according to the embodiment of the present disclosure may perform the operations executed by the UE in any of the above methods, which will not be repeatedly described here.

In one possible implementation, when the communication device is implemented as a RUE, the transceiver is configured to access the channel and send the first PSCCH and the first SL PRS, according to the indication information from the IUE.

In another possible implementation, when the communication device is implemented as an IUE, the transceiver is configured to send indication information. The indication information is configured to indicate, to the RUE, sending manners of the first PSCCH and the first SL PRS.

In an exemplary embodiment, a computer readable storage medium is provided. The computer readable storage medium stores at least one instruction, at least one program, a code set, or an instruction set. The at least one instruction, the at least one program, the code set, or the instruction set is loaded and executed by a processor to implement the method, for sending a SL PRS, performed by a communication device, provided by the above respective method embodiments.

In an exemplary embodiment, a chip is provided. The chip includes a programmable logic circuit and/or program instructions for causing the communication device to implement the method for sending a SL PRS described in the above aspects when the chip runs on the communication device.

In an exemplary embodiment, a computer program product is provided. When the computer program product is run on a processor of a communication device, the communication device performs the method for sending a SL PRS described in the above aspects.

One of ordinary skill in the art will understand that all or part of the operations for implementing the above embodiments may be completed by hardware, or may be completed by instructing related hardware by a program. All programs may be stored in a computer readable storage medium. The above computer readable storage medium may be a ROM, a magnetic disk, an optical disk, or the like.

The above description is only alternative embodiments of the present disclosure, and is not intended to limit the present disclosure. Any modification, equivalent substitution, improvement, etc. made within the spirit and principles of the present disclosure should be included within the scope of protection of the present disclosure.

**Claims**

1. A method for sending a Sidelink (SL) Positioning Reference Signal (PRS), performed by a Responding User Equipment (RUE), comprising:
   accessing a channel and sending a first Physical Sidelink Control Channel (PSCCH) and a first SL PRS, according to indication information from an Initiating User Equipment (IUE).

2. The method of claim 1, wherein the indication information comprises at least Channel Occupancy Time (COT) sharing information, and
   in a case that the RUE satisfies a COT sharing condition, the RUE is allowed to send the first PSCCH and the first SL PRS within a COT shared by the IUE.

3. The method of claim 2, wherein the COT sharing condition comprises at least one of:
   the RUE is a receiving UE of SL sending within the COT from the IUE;
   the IUE is a receiving UE of the first SL PRS sent by the RUE; or
   a Channel Access Priority Class (CAPC) value corresponding to the first SL PRS sent by the RUE is less than or equal to a CAPC value indicated in the COT sharing information sent by the IUE.

4. The method of claim 2 or 3, further comprising:
   receiving the COT sharing information sent by the IUE, wherein the COT sharing information comprises a COT length and a CAPC value.

5. The method of claim 4, wherein receiving the COT sharing information sent by the IUE comprises:

   receiving a second PSCCH sent by the IUE,
   wherein the second PSCCH carries Sidelink Control Information (SCI), and the COT sharing information is indicated by at least one bit field in the SCI;
   the CAPC value is indirectly indicated by a priority field in the SCI; and
   a length of a bit field for indicating the COT length is $A+2^{\mu}-1$, wherein A is a positive integer determined according to a network configuration or a pre-configuration, and $\mu$ is a subcarrier spacing index of a current carrier.

6. The method of claim 1, wherein the indication information comprises first SL PRS trigger information sent by the IUE to the RUE; and
   the RUE is allowed to send the first PSCCH and the first SL PRS within a COT shared by the IUE.

7. The method of claim 6, wherein the first SL PRS trigger information comprises a second PSCCH and/or a second SL PRS sent by the IUE, and SCI in the second PSCCH comprises a bit field for indicating a COT length.

8. The method of claim 1, wherein the indication information comprises second SL PRS trigger information sent by the IUE to the RUE; and
   the RUE is allowed to access the channel by using a Type 2 Listen Before Talk (LBT) manner and send the first PSCCH and the first SL PRS, before a latest time, wherein the latest time is indicated by the IUE.

9. The method of claim 8, wherein the second SL PRS trigger information comprises a second PSCCH and/or a second SL PRS sent by the IUE, and SCI in the second PSCCH comprises a bit field for indicating the latest time.

10. The method of claim 1, wherein the indication information comprises indication information, for a first transmission resource and a first channel access manner, sent by the IUE to the RUE; and
    accessing the channel and sending the first PSCCH and the first SL PRS, according to the indication information from the IUE comprises:
    accessing the channel according to the first channel access manner, and sending the first PSCCH and the first SL PRS on the first transmission resource.

11. The method of claim 10, wherein the first channel access manner comprises a Type 2 LBT manner, and/or the first channel access manner comprises a Type 1 LBT manner.

12. The method of claim 10, wherein the first transmission resource comprises a reserved transmission resource indicated by the IUE through a second PSCCH, and the first channel access manner is indicated in the second PSCCH.

13. The method of any one of claims 1 to 12, wherein the first PSCCH and the first SL PRS are sent on same Orthogonal Frequency Division Multiplexing (OFDM) symbol(s) within a same slot; or
the first PSCCH and the first SL PRS are sent on adjacent OFDM symbols within a same slot.

14. The method of claim 13, wherein a bandwidth occupied by the first PSCCH is configured by a network or pre-configured; and
a number of OFDM symbols occupied by the first PSCCH is configured by the network or pre-configured, or the first PSCCH occupies one OFDM symbol.

15. The method of claim 14, wherein the bandwidth occupied by the first PSCCH is a subchannel in a resource pool; or
the bandwidth occupied by the first PSCCH is indicated by pre-configuration information or configuration information of the resource pool, and the bandwidth occupied by the first PSCCH is less than or equal to a bandwidth occupied by the first SL PRS.

16. The method of any one of claims 1 to 12, wherein sending the first PSCCH and the first SL PRS comprises:

sending the first PSCCH, a first Physical Sidelink Shared Channel (PSSCH), and the first SL PRS, wherein the first PSCCH and the first PSSCH are used to indicate a sending of the first SL PRS and to indicate a reserved resource for sending the SL PRS.

17. The method of claim 16, wherein the first PSCCH, the first PSSCH, and the first SL PRS are sent on same OFDM symbol(s) within a same slot; or
the first PSCCH and the first PSSCH are sent on same OFDM symbol(s) within a same slot, and the first PSSCH and the first SL PRS are sent on adjacent OFDM symbols within a same slot.

18. The method of claim 16, wherein a bandwidth occupied by the first PSCCH and the first PSSCH is configured by a network or pre-configured, or the bandwidth occupied by the first PSSCH is indicated by a second PSCCH sent by the IUE; and
a number of OFDM symbols occupied by the first PSCCH and the first PSSCH is configured by a network or pre-configured, or the first PSCCH occupies one OFDM symbol.

19. The method of claim 1, wherein the first PSCCH and the first SL PRS are sent on non-adjacent OFDM symbols within a same slot; or
the first PSSCH and the first SL PRS are sent within different slots.

20. The method of claim 19, wherein accessing the channel and sending the first PSCCH and the first SL PRS, according to the indication information from the IUE comprises:

accessing the channel and sending the first PSCCH, according to first indication information from the IUE; and
accessing the channel and sending the first SL PRS, according to second indication information from the IUE.

21. The method of claim 20, wherein the second indication information comprises at least COT sharing information;

in a case that the RUE satisfies a COT sharing condition, the RUE is allowed to send the first SL PRS within a COT shared by the IUE; and
the COT sharing condition comprises at least one of:

the RUE is a receiving UE of SL sending within the COT from the IUE;
the IUE is a receiving UE of the first SL PRS sent by the RUE; or
a CAPC value corresponding to the first SL PRS sent by the RUE is less than or equal to a CAPC value indicated in the COT sharing information sent by the IUE.

22. The method of claim 20, wherein the second indication information comprises first SL PRS trigger information sent by the IUE to the RUE; and
the RUE is allowed to send the first SL PRS within a COT indicated by the first SL PRS trigger information, wherein the first trigger information comprises a second PSCCH and/or a second SL PRS sent by the IUE, and the second PSCCH carries a COT length.

23. The method of claim 20, wherein the second indication information comprises second SL PRS trigger information sent by the IUE to the RUE; and
the RUE is allowed to send the first SL PRS before a latest time indicated by the second SL PRS trigger information.

24. The method of claim 20, wherein the second indication information comprises indication information, for a first transmission resource and a first channel access manner, sent by the IUE to the RUE; and
accessing the channel and sending the first SL PRS, according to the second indication information from the IUE comprises:
accessing the channel according to the first channel access manner, and sending the first SL PRS on the first transmission resource.

25. The method of claim 20, wherein the first indication information comprises at least one of: COT sharing information, SL PRS trigger information, a second transmission resource, or a second channel access manner;

in a case that a PSCCH sharing condition is satisfied, the RUE is allowed to access the channel and send the first PSCCH, according to the second indication information; and
the PSCCH sharing condition comprises at least one of:

a CAPC value indicated in the first PSCCH sent by the RUE is less than or equal to a CAPA value indicated in the COT sharing information sent by the IUE;
resource reservation information indicated in the first PSCCH sent by the RUE is information received by the IUE;
the RUE is a receiving UE of SL sending within the COT from the IUE;
the IUE is a receiving UE of the first SL PRS sent by the RUE;
a CAPC value corresponding to the first SL PRS sent by the RUE is less than or equal to the CAPC value indicated in the COT sharing information sent by the IUE;
first SL PRS trigger information sent by the IUE is received by the RUE, wherein the first SL PRS trigger information comprises a second PSCCH and/or a second SL PRS sent by the IUE, and SCI in the second PSCCH comprises a bit field for indicating a COT length;
second SL PRS trigger information sent by the IUE is received by the RUE, wherein the second SL PRS trigger information comprises the second PSCCH and/or the second SL PRS sent by the IUE, the second SL PRS trigger information is used to indicate a latest time at which the RUE is allowed to access the channel by using a Type 2 LBT manner, and the SCI in the second PSCCH comprises a bit field used to indicate the latest time; or
indication information for the second transmission resource and the second channel access manner sent by the IUE is received by the RUE.

26. A method for sharing a Channel Occupancy Time (OCT), performed by an Initiating User Equipment (IUE), comprising:
sending indication information, wherein the indication information is used for indicating, to a Responding User Equipment (RUE), sending manners of a first Physical Sidelink Control Channel (PSCCH) and a first Sidelink Positioning Reference Signal (SL PRS).

27. The method of claim 26, wherein the indication information comprises at least COT sharing information; and
in a case that the RUE satisfies a COT sharing condition, the RUE is allowed to send the first PSCCH and the first SL PRS within a COT shared by the IUE.

28. The method of claim 27, wherein the COT sharing condition comprises at least one of:

the RUE is a receiving UE of SL sending within the COT from the IUE;
the IUE is a receiving UE of the first SL PRS sent by the RUE; or
a Channel Access Priority Class (CAPC) value corresponding to the first SL PRS sent by the RUE is less than or equal to a CAPC value indicated in the COT sharing information sent by the IUE.

29. The method of claim 27 or 28, further comprising:

sending the COT sharing information to the RUE, wherein the COT sharing information comprises a COT length and a CAPC value.

30. The method of claim 29, wherein sending the COT sharing information to the RUE comprises:

sending a second PSCCH to the RUE,
wherein the second PSCCH carries Sidelink Control Information (SCI), and the COT sharing information is indicated by at least one bit field in the SCI;
the CAPC value is indirectly indicated by a priority field in the SCI; and
a length of a bit field for indicating the COT length is $A+2^{\mu} - 1$, wherein A is a positive integer determined according to a network configuration or a pre-configuration, and $\mu$ is a subcarrier spacing index of a current carrier.

31. The method of claim 26, wherein the indication information comprises first SL PRS trigger information sent by the IUE to the RUE; and
the RUE is allowed to send the first PSCCH and the first SL PRS within a COT shared by the IUE.

32. The method of claim 31, wherein the first SL PRS trigger information comprises a second PSCCH and/or a second SL PRS sent by the IUE, and SCI in the second PSCCH comprises a bit field for indicating a COT length.

33. The method of claim 26, wherein the indication information comprises second SL PRS trigger information sent by the IUE to the RUE; and
the RUE is allowed to access the channel by using a Type 2 Listen Before Talk (LBT) manner and send the first PSCCH and the first SL PRS before a latest time, wherein the latest time is indicated by the IUE.

34. The method of claim 33, wherein the second SL PRS trigger information comprises a second PSCCH and/or a second SL PRS sent by the IUE, and SCI in the second PSCCH comprises a bit field for indicating the latest time.

35. The method of claim 26, wherein the indication information comprises indication information, for a first transmission resource and a first channel access manner, sent by the IUE to the RUE; and
the RUE is allowed to access the channel according to the first channel access manner, and send the first PSCCH and the first SL PRS on the first transmission resource.

36. The method of claim 35, wherein the first channel access manner comprises a Type 2 LBT manner, and/or the first channel access manner comprises a Type 1 LBT manner.

37. The method of claim 35, wherein the first transmission resource comprises a reserved transmission resource indicated by the IUE through a second PSCCH, and the first channel access manner is indicated in the second PSCCH.

38. The method of any one of claims 26 to 37, wherein the first PSCCH and the first SL PRS are sent on same Orthogonal Frequency Division Multiplexing (OFDM) symbol(s) within a same slot; or
the first PSCCH and the first SL PRS are sent on adjacent OFDM symbols within a same slot.

39. The method of claim 38, wherein a bandwidth occupied by the first PSCCH is configured by a network or pre-configured; and
a number of OFDM symbols occupied by the first PSCCH is configured by the network or pre-configured, or the first PSCCH occupies one OFDM symbol.

40. The method of claim 39, wherein the bandwidth occupied by the first PSCCH is a subchannel in a resource pool; or
the bandwidth occupied by the first PSCCH is indicated by pre-configuration information or configuration information of the resource pool, and the bandwidth occupied by the first PSCCH is less than or equal to a bandwidth occupied by the first SL PRS.

41. The method of any one of claims 26 to 37, wherein the indication information is used for indicating, to the RUE, sending manners of the first PSCCH, the first PSSCH, and the first SL PRS; and
wherein the first PSCCH and the first PSSCH are used to indicate a sending of the first SL PRS and to indicate a reserved resource for sending the SL PRS.

42. The method of claim 41, wherein the first PSCCH, the first PSSCH, and the first SL PRS are sent on same OFDM symbol(s) within a same slot; or
the first PSCCH and the first PSSCH are sent on same OFDM symbol(s) within a same slot, and the first PSSCH and the first SL PRS are sent on adjacent OFDM symbols within a same slot.

43. The method of claim 41, wherein a bandwidth occupied by the first PSCCH and the first PSSCH is configured by a network or pre-configured, or the bandwidth occupied by the first PSSCH is indicated by a second PSCCH sent by the IUE; and
a number of OFDM symbols occupied by the first PSCCH and the first PSSCH is configured by a network or pre-configured, or the first PSCCH occupies one OFDM symbol.

44. The method of claim 26, wherein the first PSCCH and the first SL PRS are sent on non-adjacent OFDM symbols within a same slot; or
the first PSSCH and the first SL PRS are sent within different slots.

45. The method of claim 44, wherein sending the indication information comprises:

sending first indication information, wherein the first indication information is used for indicating, to the RUE, a sending manner of the first PSCCH; and
sending second indication information, wherein the second indication information is used for indicating, to the RUE, a sending manner of the first SL PRS.

46. The method of claim 45, wherein the second indication information comprises at least COT sharing information;

in a case that the RUE satisfies a COT sharing condition, the RUE is allowed to send the first SL PRS within a COT shared by the IUE; and
the COT sharing condition comprises at least one of:

the RUE is a receiving UE of SL sending within the COT from the IUE;
the IUE is a receiving UE of the first SL PRS sent by the RUE; or
a CAPC value corresponding to the first SL PRS sent by the RUE is less than or equal to a CAPC value indicated in the COT sharing information sent by the IUE.

47. The method of claim 45, wherein the second indication information comprises first SL PRS trigger information sent by the IUE to the RUE; and
the RUE is allowed to send the first SL PRS within a COT indicated by the first SL PRS trigger information, wherein the first trigger information comprises a second PSCCH and/or a second SL PRS sent by the IUE, and the second PSCCH carries a COT length.

48. The method of claim 45, wherein the second indication information comprises second SL PRS trigger information sent by the IUE to the RUE; and
the RUE is allowed to access the channel by using a Type 2 LBT manner and send the first SL PRS, before a latest time indicated by the second SL PRS trigger information.

49. The method of claim 45, wherein the second indication information comprises indication information, for a first transmission resource and a first channel access manner, sent by the IUE to the RUE; and
the RUE is allowed to access the channel by using the first channel access manner and send the first SL PRS on the first transmission resource.

50. The method of claim 45, wherein the first indication information comprises at least one of: COT sharing information, SL PRS trigger information, a second transmission resource, or a second channel access manner;

in a case that a PSCCH sharing condition is satisfied, the RUE is allowed to access the channel and send the first PSCCH, according to the second indication information; and
the PSCCH sharing condition comprises at least one of:

a CAPC value indicated in the first PSCCH sent by the RUE is less than or equal to a CAPA value indicated in the COT sharing information sent by the IUE;

resource reservation information indicated in the first PSCCH sent by the RUE is information received by the IUE;

the RUE is a receiving UE of SL sending within the COT from the IUE;

the IUE is a receiving UE of the first SL PRS sent by the RUE;

a CAPC value corresponding to the first SL PRS sent by the RUE is less than or equal to the CAPC value indicated in the COT sharing information sent by the IUE;

first SL PRS trigger information sent by the IUE is received by the RUE, wherein the first SL PRS trigger information comprises a second PSCCH and/or a second SL PRS sent by the IUE, and SCI in the second PSCCH comprises a bit field for indicating a COT length;

second SL PRS trigger information sent by the IUE is received by the RUE, wherein the second SL PRS trigger information comprises the second PSCCH and/or the second SL PRS sent by the IUE, the second SL PRS trigger information is used to indicate a latest time at which the RUE is allowed to access the channel by using a Type 2 LBT manner, and the SCI in the second PSCCH comprises a bit field used to indicate the latest time; or

indication information for the second transmission resource and the second channel access manner sent by the IUE is received by the RUE.

51. An apparatus for sending a Sidelink (SL) Positioning Reference Signal (PRS), wherein the apparatus is used for implementing a Responding User Equipment (RUE), and the apparatus comprises:

a first sending module, configured to access a channel and send a first Physical Sidelink Control Channel (PSCCH) and a first SL PRS, according to indication information from an Initiating User Equipment (IUE).

52. An apparatus for sharing a Channel Occupancy Time (OCT), wherein the apparatus is used for implementing an Initiating User Equipment (IUE), and the apparatus comprises:

a second sending module, configured to send indication information, wherein the indication information is used for indicating, to a Responding User Equipment (RUE), sending manners of a first Physical Sidelink Control Channel (PSCCH) and a first Sidelink Positioning Reference Signal (SL PRS).

53. A Responding User Equipment (RUE), comprising: a processor and a transceiver coupled to the processor, wherein the transceiver is configured to access a channel and send a first Physical Sidelink Control Channel (PSCCH) and a first Sidelink Positioning Reference Signal (SL PRS), according to indication information from an Initiating User Equipment (IUE).

54. An Initiating User Equipment (IUE), comprising: a processor and a transceiver coupled to the processor, wherein the transceiver is configured to send indication information, wherein the indication information is used for indicating, to a Responding User Equipment (RUE), sending manners of a first Physical Sidelink Control Channel (PSCCH) and a first Sidelink Positioning Reference Signal (SL PRS).

55. A Responding User Equipment (RUE), comprising: a processor and a memory, wherein the memory stories at least one instruction, at least one program, a code set or an instruction set, and the at least one instruction, the at least one program, the code set or the instruction set is loaded and executed by the processor to implement the method for sending a Sidelink (SL) Positioning Reference Signal (PRS) of any one of claims 1 to 25.

56. An Initiating User Equipment (IUE), comprising: a processor and a memory, wherein the memory stories at least one instruction, at least one program, a code set or an instruction set, and the at least one instruction, the at least one program, the code set or the instruction set is loaded and executed by the processor to implement the method for sending a Sidelink (SL) Positioning Reference Signal (PRS) of any one of claims 26 to 50.

57. A computer readable storage medium having stored therein executable instructions, wherein the executable instructions are loaded and executed by a processor to cause a communication device to implement the method for sending a Sidelink (SL) Positioning Reference Signal (PRS) of any one of claims 1 to 50.

58. A chip comprising a programmable logic circuit or a program, wherein a communication device equipped with the chip is used for implementing the method for sending a Sidelink (SL) Positioning Reference Signal (PRS) of any one of claims 1 to 50.

**FIG. 1**

**FIG. 2**

EP 4 654 683 A1

**FIG. 3**

**FIG. 4**

**FIG. 5**

AGC

DMRS

PSCCH

DMRS

PSSCH

DMRS

GP

PSFCH

GP

AGC for receiving
the PSFCH

**FIG. 6**

AGC

DMRS

PSCCH

DMRS

DMRS

DMRS

GAP

0 1 2 3 4 5 6 7 8 9 10 11 12 13

**FIG. 7**

Port 0 / Port 1

Port 0 / Port 1

Port 0 / Port 1

Port 0 / Port 1

Port 0 / Port 1

Port 0 / Port 1

RE#0 RE#1 RE#2 RE#3 RE#4 RE#5 RE#6 RE#7 RE#8 RE#9 RE#10 RE#11

**FIG. 8**

The PSCCH frequency domain resource indication

PSCCH

PSSCH

The size of a sub-channel

PSCCH

PSSCH

The number of sub-channels=3

PSCCH

PSSCH

*f*

*t*

The index of the start RB in the sub-channel

**FIG. 9**

|←————Slot 0————→|←————Slot 1————→|

☐ DL symbol　　☐ Flexible symbol　　■ UL symbol

**FIG. 10**

Starting symbol position=3

Number of symbols=11

*f*

*t*

0 1 2 3 4 5 6 7 8 9 10 11 12 13

▨ PSCCH　　▨ PSSCH　　☐ GP　　☐ Symbols those are not available for SL

**FIG. 11**

**FIG. 12**

**FIG. 13**

**FIG. 14**

60MHz carrier bandwidth

| 20 MHz | | 20 MHz | | 20 MHz |
|---|---|---|---|---|
| RB set #0 | Guard band | RB set #2 | Guard band | RB set #3 |

**FIG. 15**

Access a channel and send the first PSCCH and the first SL PRS, according to indication information from an IUE — 210

**FIG. 16**

Send indication information. The indication information is used for indicating, to a RUE, sending manners of the first PSCCH and the first SL PRS — 220

**FIG. 17**

IUE              RUE

301, Second PSCCH (indication information: COT sharing information)

302, Access the channel and send the first PSCCH and the first SL PRS within the COT shared by the IUE

**FIG. 18**

| IUE | | RUE |
|-----|---|-----|

—303, Indication information: the SL PRS trigger information→

304, Access the channel and send the first PSCCH and the first SL PRS

**FIG. 19**

| IUE | | RUE |
|-----|---|-----|

305, Indication information: the first transmission resource and the first channel access manner

306, Access the channel by using the first channel access manner, and send the first PSCCH and the first SL PRS on the first transmission resource

**FIG. 20**

| IUE | | RUE |
|-----|---|-----|

—307, First indication information, for indicating the first PSCCH→

308, Second indication information, for indicating the first SL PRS

309, Access the channel and send the first PSCCH, according to the first indication information

310, Access the channel and send the first SL PRS, according to the second indication information

**FIG. 21**

Reserved resource

Frequency

SL PRS

PSC CH

Sending of the SL PRS indicated by the PSCCH

Reserved resource for the SL PRS

Slot n ◄───►◄─── Slot n+1 ───►◄─── ..... ───►◄─── Slot n+k ───►

**FIG. 22**

Reserved resource

Frequency

P S C C H

Sending of the SL PRS indicated by the PSCCH

SL PRS

Reserved resource for the SL PRS

Slot n ◄───►◄─── Slot n+1 ───►◄─── ..... ───►◄─── Slot n+k ───►

**FIG. 23**

Reserved resource

Frequency

SL PRS

PSC CH

PSC CH

Sending of the SL PRS indicated by the PSCCH and PSSCH

Reserved resource for the SL PRS

Slot n ◄───►◄─── Slot n+1 ───►◄─ ..... ─►◄─── Slot n+k ───►

**FIG. 24**

41

**FIG. 25**

**FIG. 26**

Sending of the
SL PRS indicated
by the PSCCH

Reserved resource

Frequency

SL
PRS

Reserved
resource
for the SL
PRS

PSCCH

Slot n | Slot n+1 | … … | Slot n+k

**FIG. 27**

Responding User Equipment

First sending module — 401

First receiving module — 402

**FIG. 28**

Initiating User Equipment

Second sending
module — 403

**FIG. 29**

Processor ⌐101     Transmitter ⌐103

◄═══════════ Bus ═══════════► ⌐105

Receiver ⌐102     Memory ⌐104

**FIG. 30**

## INTERNATIONAL SEARCH REPORT

| | International application No. |
|---|---|
| | **PCT/CN2023/072420** |

**A.    CLASSIFICATION OF SUBJECT MATTER**

H04W64/00(2009.01)i

According to International Patent Classification (IPC) or to both national classification and IPC

**B.    FIELDS SEARCHED**

Minimum documentation searched (classification system followed by classification symbols)

IPC：H04L, H04B, H04W, H04Q

Documentation searched other than minimum documentation to the extent that such documents are included in the fields searched

Electronic data base consulted during the international search (name of data base and, where practicable, search terms used)

WPABSC, VCN, VEN, 3GPP: 定位参考信息, 信道占用时间, 侧链路, 侧行链路, 物理侧行控制信道, 信道接入优先级, 指示, positioning, PRS, COT, sidelink, SL, PSCCH, PSSCH, CAPC, indicator, identifier, SCI, LBT, OFDM

**C.    DOCUMENTS CONSIDERED TO BE RELEVANT**

| Category* | Citation of document, with indication, where appropriate, of the relevant passages | Relevant to claim No. |
|---|---|---|
| Y | WO 2022005727 A1 (QUALCOMM INC.) 06 January 2022 (2022-01-06)<br>description, paragraphs 69-105, and figures 3-6 | 1-58 |
| Y | CN 114339987 A (SPREADTRUM COMMUNICATIONS (SHANGHAI) CO., LTD.) 12 April 2022 (2022-04-12)<br>description, paragraphs 28-47, and figures 1-2 | 1-58 |
| Y | CN 114424640 A (QUALCOMM INC.) 29 April 2022 (2022-04-29)<br>description, paragraphs 37-38 | 3-5, 7, 9, 21, 25 |
| A | MEDIATEK. "3GPP TSG RAN WG1 meeting #101-e R1-2003668"<br>*Evaluation of DL-AoD technique under IIoT Scenario*, 05 June 2020 (2020-06-05),<br>entire document | 1-58 |
| A | CN 114257355 A (SPREADTRUM COMMUNICATIONS (SHANGHAI) CO., LTD.) 29 March 2022 (2022-03-29)<br>entire document | 1-58 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 April 2023** | **10 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/072420**

| Patent document cited in search report | | | Publication date (day/month/year) | Patent family member(s) | | | Publication date (day/month/year) |
|---|---|---|---|---|---|---|---|
| WO | 2022005727 | A1 | 06 January 2022 | CN | 115917987 | A | 04 April 2023 |
| | | | | US | 2022007206 | A1 | 06 January 2022 |
| | | | | KR | 20230034220 | A | 09 March 2023 |
| | | | | BR | 112022026042 | A2 | 17 January 2023 |
| CN | 114339987 | A | 12 April 2022 | WO | 2022068836 | A1 | 07 April 2022 |
| CN | 114424640 | A | 29 April 2022 | EP | 4035468 | A1 | 03 August 2022 |
| | | | | US | 2021092783 | A1 | 25 March 2021 |
| | | | | WO | 2021061880 | A1 | 01 April 2021 |
| | | | | IN | 202227009579 | A | 08 July 2022 |
| CN | 114257355 | A | 29 March 2022 | WO | 2022062891 | A1 | 31 March 2022 |

Form PCT/ISA/210 (patent family annex) (July 2022)